(19) Europäisches Patentamt

European Patent Office

Office européen des brevets

(11) **EP 2 682 709 B1**

(12) # EUROPÄISCHE PATENTSCHRIFT

(45) Veröffentlichungstag und Bekanntmachung des Hinweises auf die Patenterteilung:
**25.08.2021 Patentblatt 2021/34**

(51) Int Cl.:
*G01B 9/02* <sup>(2006.01)</sup>   *G01P 3/36* <sup>(2006.01)</sup>

(21) Anmeldenummer: **13173378.4**

(22) Anmeldetag: **24.06.2013**

(54) **Vorrichtung und Verfahren zur interferometrischen Vermessung eines Objekts**

Device and method for interferometric measuring of an object

Dispositif et procédé de mesure interférométrique d'un objet

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **03.07.2012 DE 102012211549**

(43) Veröffentlichungstag der Anmeldung:
**08.01.2014 Patentblatt 2014/02**

(73) Patentinhaber: **Polytec GmbH**
**76337 Waldbronn (DE)**

(72) Erfinder:
• **Dräbenstedt, Alexander**
**76275 Ettlingen (DE)**
• **Boedecker, Sebastian**
**76137 Karlsruhe (DE)**

• **Rembe, Christian**
**76337 Waldbronn (DE)**
• **Schüssler, Matthias**
**76337 Waldbronn (DE)**
• **Xu, Thian-Hua**
**76307 Karlsbad (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
**EP-A1- 2 280 256      WO-A1- 00/43730**
**DE-A1-102007 010 389   US-A1- 2003 174 339**
**US-A1- 2006 103 850    US-A1- 2007 091 316**
**US-A1- 2007 109 553    US-A1- 2007 278 389**

EP 2 682 709 B1

**Beschreibung**

Die Erfindung betrifft eine Vorrichtung zur interferometrischen Vermessung eines Objekts gemäß dem Oberbegriff des Anspruchs 1 sowie ein Verfahren zur interferometrischen Vermessung eines Objekts gemäß Oberbegriff des Anspruchs 10.

Vorrichtungen und Verfahren zur interferometrischen Vermessung eines Objekts sind in verschiedenen Ausgestaltungen bekannt: So ist beispielsweise ein typischer Aufbau als Laser-Doppler-Vibrometer bekannt, welcher einen Laser als Strahlungsquelle zur Erzeugung eines Ausgangsstrahls umfasst, eine Strahlteilervorrichtung zur Aufteilung des Ausgangsstrahls in einem Mess- und und einen Referenzstrahl, eine optische Überlagerungsvorrichtung und einen ersten Detektor.

Der Messstrahl wird auf einen Messpunkt auf dem Objekt geleitet und der zumindest teilweise reflektierte Messstrahl ("Empfangsstrahl" genannt) wird zusammen mit dem Referenzstrahl auf einer Detektorfläche des Detektors überlagert, sodass durch Auswertung des Interferenzsignals, beispielsweise auf eine Bewegung der Objektoberfläche am Messpunkt in Richtung der optischen Achse des Messstrahls rückgeschlossen werden kann.

Darüber hinaus sind Anordnungen bekannt, welche einen heterodynen Aufbau aufweisen. Hierbei wird typischerweise mittels einer Braggzelle eine Frequenzverschiebung zwischen Referenz- und Messstrahl bewirkt. Grundsätzlich entsteht durch die Interferenz der überlagerten Mess- und Referenzstrahlen eine Intensitätsmodulation mit der Frequenz der Differenzfrequenz der beiden Strahlen. Bei einem heterodynen Aufbau setzt sich die Differenzfrequenz auf der mit der Braggzelle eingebrachten Frequenzverschiebung und der Dopplerverschiebung durch Bewegung des Objekts zusammen. Die bei dem heterodynen Aufbau eingebrachte Frequenzverschiebung dient im elektrotechnischen Sinne als Trägerfrequenz, welche durch die Geschwindigkeit des Objekts frequenzmoduliert wird bzw. durch Entfernungsänderungen des Objekts phasenmoduliert wird.

Durch Phasendemodulation des modulierten Trägersignals lässt sich die Bewegung des Objekts somit in der Entfernungskoordinate zurückgewinnen. Durch Frequenzdemodulation des modulierten Trägersignals lässt sich die Geschwindigkeit des Objekts zurückgewinnen.

US 2007/0091316 A1 offenbart ein heterodynes Mehrstrahlvibrometer zur gleichzeitigen Vermessung mehrerer Messpunkte auf einem Objekt.

US 2006/0103850 A1 offenbart ein Interferometer mit mehreren Messstrahlen, welche mittels optischer Fasern die Vermessung mehrerer Messpunkte auf einem Objekt ermöglichen.

WO 00/4370 offenbart ein OCT-Interferometer mit mehreren Messarmen;

US 2003/0174339 A1 offenbart ein optisches Interferometer mit einem bidirektionalem Messarm.

US 2007/0109553 A1 offenbart ein OCT/OCR-Interferometer zur optischen Kohärenztomographie.

US 2007/0278389 A1 offenbart ein Mehrkanalinterferometer mit mehreren Messarmen.

EP 2 280 256 A1 offenbart ein OCT-Interferometer mit einer Strahlungsquelle variabler Frequenz.

Der vorliegenden Erfindung liegt die Aufgabe zugrunde, die Anwendungsbereiche der vorbekannten Vorrichtungen und Verfahren zu erweitern und/oder die Messgenauigkeit und/oder Zuverlässigkeit zu erhöhen.

Gelöst ist die Aufgabe durch eine Vorrichtung zur interferometrischen Vermessung eines Objekts gemäß Anspruch 1 sowie durch ein Verfahren zur interferometrischen Vermessung eines Objekts gemäß Anspruch 10. Vorzugsweise Ausgestaltungen der erfindungsgemäßen Vorrichtung finden sich in den Ansprüchen 2 bis 9; vorzugsweise Ausgestaltungen des erfindungsgemäßen Verfahrens finden sich in den Ansprüchen 11 bis 14. Hiermit wird der Wortlaut sämtlicher Ansprüche explizit per Referenz in die Beschreibung einbezogen.

Die erfindungsgemäße Vorrichtung zur interferometrischen Vermessung eines Objekts umfasst eine Strahlungsquelle zur Erzeugung eines Ausgangsstrahls, eine Strahlteilervorrichtung zur Aufteilung des Ausgangsstrahls in einen Mess- und einen Referenzstrahl, eine optische Überlagerungsvorrichtung und einen ersten Detektor.

Die Überlagerungsvorrichtung und der erste Detektor sind derart zusammenwirkend ausgebildet, dass der von dem Objekt zumindest teilweise reflektierte Messstrahl (als Empfangsstrahl) und der erste Referenzstrahl auf mindestens einer Detektorfläche des ersten Detektors überlagert sind.

Hinsichtlich dieses Grundaufbaus entspricht die erfindungsgemäße Vorrichtung somit vorbekannten Interferometern, insbesondere weisen typische, aus dem Stand der Technik bekannte, Laser-Doppler-Vibrometer solch einen Aufbau auf.

Wesentlich ist, dass bei der erfindungsgemäßen Vorrichtung die Strahlteilervorrichtung ausgebildet ist zur Aufteilung des Ausgangsstrahls in einen Messstrahl, einen ersten Referenzteilstrahl und mindestens einen zweiten Referenzteilstrahl und dass die Strahlteilervorrichtung ausgebildet ist zur Aufteilung des Empfangsstrahls in einen ersten Empfangsteilstrahl und mindestens einen zweiten Empfangsteilstrahl. Im Gegensatz zu vorbekannten Vorrichtungen werden somit Empfangsstrahl und Referenzstrahl jeweils zumindest in zwei Teilstrahlen aufgeteilt.

Weiterhin umfasst die erfindungsgemäße Vorrichtung mindestens einen zweiten Detektor und ist derart ausgebildet, dass der erste Empfangsstrahl mit dem ersten Referenzteilstrahl auf einer Detektionsfläche des ersten Detektors und der zweite Empfangsteilstrahl mit dem zweiten Referenzteilstrahl auf einer Detektionsfläche des zweiten Detektors überlagert wird, jeweils unter Ausbildung einer optischen Interferenz, zur Bestimmung der Bewegung und/oder Geschwindigkeit der Oberfläche des Objekts.

Die erfindungsgemäße Vorrichtung weist weiterhin eine Auswerteeinheit zur Auswertung der Messsignale des ersten und des zweiten Detektors auf, welche Auswerteeinheit ausgebildet ist, die Messsignale der beiden Detektoren nach dem Prinzip der Empfangs-Diversität auszuwerten.

Die Erfindung ist in der Erkenntnis des Anmelders begründet, dass häufig Objektoberflächen den Messstrahl derart beeinflussen, dass eine Verringerung der Messgenauigkeit oder sogar ein Messausfall resultiert:

Der breiten Verwendbarkeit von Vorrichtungen zu interferometrischen Vermessungen eines Objekts und insbesondere Vibrometern ist es geschuldet, dass diese Vorrichtungen nicht nur zur Vermessung von Objekten mit einer als ideal anzusehenden optisch spiegelnden Oberfläche Anwendung finden, sondern auch zur Vermessung von Objekten mit unkooperativen und insbesondere rauen Oberflächen eingesetzt werden. Von einer rauen Oberfläche wird der Messstrahl typischerweise diffus gestreut und die Intensitätsverteilung des Empfangsstrahls ist daher von Speckle geprägt. Die Speckle rühren daher, dass die Phasenunterschiede des Messstrahls, der aufgrund der Rauigkeit der Oberfläche des Messobjekts an verschieden zu der Vorrichtung beabstandeten Objektpunkten gestreut wird, dazu führen, dass sich in jeder Richtung unabhängig die resultierende Gesamtintensität zu stark voneinander abweichenden Werten ergibt. Je nach Beschaffenheit und Ausrichtung der vermessenen Oberfläche kann somit eine sehr hohe Gesamtintensität resultieren; ebenso ist es jedoch möglich, dass sich aufgrund der Phasenunterschiede eine sehr geringe oder sogar eine Intensität 0 ergibt. Auch auf der Detektorfläche des Detektors führt die Interferenz vieler gestreuter Lichtbeiträge mit unterschiedlicher Phase dazu, dass die Gesamtintensität stark schwankt.

Da der Rauschpegel der auf dem Objekt zu messenden Position oder Geschwindigkeit mit sinkender Signalstärke ansteigt, ist die Qualität der Messung somit von dem Speckle-Muster abhängig. Das Speckle-Muster ist jedoch veränderlich und schwankt insbesondere abhängig von dem aktuellen Messpunkt und Ausrichtung der Oberfläche des Objekts.

Darüber hinaus werden die vorgenannten Phasenunterschiede zwischen den Speckles als scheinbare Bewegung gemessen: Aufgrund der Phasenunterschiede zwischen den Speckles können tiefe Einbrüche in der Stärke des Messsignals entstehen (sogenannte "Dropouts"), da sich die Lichtbeiträge gegenseitig vollständig aufheben können. Die Auswertung der Messsignale des Detektors ergibt dann einen scheinbaren Sprung in der Position der vermessenen Oberfläche des Objekts, wobei der Sprung etwa einem Viertel der verwendeten Wellenlänge des Messstrahls entspricht. Hieraus resultiert entsprechend ein hoher Peak, beispielsweise in der ausgewerteten Geschwindigkeit, der jedoch keine Entsprechung in der realen Bewegung des Objekts findet.

Wenn darüber hinaus eine scannende Messung durchgeführt wird, bei welcher der Messstrahl über eine Vielzahl von Messpunkten auf dem Objekt bewegt wird und/oder wenn die Strahlungsquelle der Vorrichtung und die Oberfläche des Objekts nicht optimal zueinander fixiert sind und/oder wenn sich durch atmosphärische Schlieren-Effekte eine Ablenkung des Messstrahls ergibt, ändert sich das empfangene Speckle-Muster und das auswertbare Signal wird verfälscht und insbesondere zeitweise tiefe Signaleinbrüche aufweisen.

Die Erfindung nutzt nun die Erkenntnis, dass die vorgenannten Signaleinbrüche typischerweise zufällig (aber dennoch statistisch beschreibbar) auftreten und bei üblichen Messbedingungen nur einen niedrigen Prozentsatz der Messzeit bzw. der zu vermessenden Messpunkte auf der Oberfläche des Objekts betreffen. Wenn nun zwei oder mehrere unabhängige Rohsignale zu unterschiedlichen Zeiten die vorgenannten Dropouts aufweisen und die Rohsignale statistisch unabhängig oder zumindest in etwa oder bevorzugt im Wesentlichen statistisch unabhängig sind, dann ist die Wahrscheinlichkeit, dass bei zwei Messkanälen gleichzeitig ein Einbruch auftritt, das Produkt der Wahrscheinlichkeit dessen für jeden einzelnen Kanal. Diese kombinierte Wahrscheinlichkeit ist sehr viel geringer als für einen einzelnen Kanal. Dies bedeutet somit, dass die Wahrscheinlichkeit der vorgenannten Dropouts erheblich verringert werden kann.

Das Prinzip der Empfangs-Diversität ist auf dem technischen Gebiet der Funkübertragung bekannt und wird dort auch als Antennen-Diversität bezeichnet. Bei einer Antennen-Diversität weist ein Empfangsgerät für Funktionssignale mindestens zwei Antennen auf, deren Signale jeweils hinsichtlich des Pegels oder besten Rauschabstandes bewertet werden und anhand dieser Bewertung wird eines der Signale zur Auswertung verwendet.

Die vorliegende Erfindung überträgt nun erstmals das Prinzip der Empfangs-Diversität wie nachfolgend beschrieben auf die interferometrische Vermessung eines Objekts:

Durch die Aufteilung des Referenzstrahls in ersten und zweiten Referenzteilstrahl sowie des Empfangsstrahls in ersten und zweiten Empfangsteilstrahl und die entsprechende Überlagerung wie vorhergehend beschrieben auf den Detektionsflächen des ersten und zweiten Detektors stehen somit separate Messsignale von mindestens zwei Detektoren zur Verfügung, welche in Analogie mit den beiden Empfängern bei der Antennen-Diversität verglichen werden können.

Auch bei der vorliegenden Erfindung ist wesentlich, dass anhand eines Gütekriteriums, welches eine Bewertung der Güte der Messdaten des ersten Detektors im Vergleich mit der Güte der Messdaten des zweiten Detektors ermöglicht, eine Auswertung erfolgt, welche abhängig von den jeweils ermittelten Gütewerten aus entweder lediglich einem Messsignal von einem der beiden Detektoren oder einem kombinierten Messsignal beider Detektoren besteht, wobei auch vorgenannte Kombination eine Wichtung abhängig von der angelegten Güte beinhalten kann.

Wesentlich für die vorliegende Erfindung ist somit nicht nur, dass eine Auswertung von Daten des Empfangsstrahls mittels zweier Detektoren erfolgt, sondern dass mittels der beiden Detektoren der Empfangsstrahl hinsichtlich unterschiedlicher Kriterien ausgewertet wird. Mittels des ersten Detektors wird somit zumindest teilweise eine andere in dem Empfangsstrahl enthaltene Information ausgewertet, verglichen mit der (zumindest teilweise) mittels des zweiten Detektors ausgewerteten Information des Empfangsstrahls.

Untersuchungen des Anmelders haben ergeben, dass die vorgenannte Informationstrennung der im Empfangsstrahl enthaltenen Informationen und Zuordnung einerseits zu dem ersten Detektor und andererseits zu dem zweiten Detektor hinsichtlich mindestens eines der folgenden Kriterien durchgeführt wird:

### a) Trennung hinsichtlich der Polarisation

Hierbei werden unterschiedliche Polarisationsanteile des Empfangsstrahls auf den ersten und zweiten Detektor abgebildet. Dies ist insbesondere bei zu vermessenden Objekten, welche eine diffus streuende Oberfläche aufweisen, vorteilhaft. Insbesondere nichtmetallische Oberflächen sind typischerweise diffus streuende Flächen. Es ist bekannt, dass Licht, welches an nichtmetallischen Oberflächen diffus gestreut wird, seine vorher definierte Polarisation verliert und somit zufällig polarisiert ist, siehe Goodman, Jospeh W., "Speckle phenomena in optics", Seite 47 ff, 2007 Roberts and Company Publishers.

Insbesondere bei solchen diffus streuenden Oberflächen bietet eine Auftrennung hinsichtlich der Polarisation somit eine kostengünstig realisierbare Möglichkeit, an den ersten und zweiten Detektor Messsignale zu erzeugen, wobei die Signaleinbrüche der Messsignale des ersten Messdetektors statistisch unabhängig oder zumindest im Wesentlichen statistisch unabhängig zu den Signaleinbrüchen der Messsignale des zweiten Messdetektors sind.

### b) Räumliche Trennung

Hierbei wird der Empfangsstrahl in mindestens einen ersten und einen zweiten Unterbereich des Strahlquerschnitts räumlich aufgeteilt und der erste Unterbereich zu dem ersten Detektor und der zweite Unterbereich zu dem zweiten Detektor weitergeleitet.
Es erfolgt somit eine räumliche Aufteilung, indem Unterbereiche des Strahlquerschnitts entweder zu Detektor 1 oder zu Detektor 2 weitergeleitet werden. In einer vorzugsweisen Ausführungsform wird der Empfangsstrahl in eine rechte Hälfte als ersten Unterbereich und eine linke Hälfte als zweiten Unterbereich aufgeteilt, d.h. der Strahlquerschnitt wird hälftig dem ersten und hälftig dem zweiten Unterbereich zugeordnet.

Bei dieser Variante erfolgt somit eine Aufteilung der räumlichen Information des Empfangsstrahls. Untersuchungen des Anmelders haben ergeben, dass insbesondere bei metallischen Oberflächen eine solche räumliche Auftrennung des Empfangsstrahls ebenfalls die gewünschte statistische Unabhängigkeit oder zumindest im Wesentlichen statistische Unabhängigkeit der Signaleinbrüche der Signale des ersten Detektors zu den Signaleinbrüchen der Messsignale des zweiten Detektors bewirkt.

### c) Modenaufteilung

Hierbei erfolgt eine Aufteilung des Empfangsstrahls derart, dass zu dem Detektor 1 zumindest teilweise unterschiedliche Strahlmoden, insbesondere Strahl-Transversalmoden geleitet werden, gegenüber Detektor 2. Beispielsweise kann zu Detektor 1 lediglich eine Gauß-Grundmode des Empfangsstrahls geleitet werden und auf den Detektor 2 lediglich weitere Anteile des Empfangsstrahls, insbesondere höhere Strahlmoden ohne Gauß-Grundmode.

Auch die Aufteilung hinsichtlich verschiedener Strahlmoden des Empfangsstrahls bewirkt, dass die Signaleinbrüche der Messsignale des ersten Detektors statistisch unabhängig oder zumindest näherungsweise statistisch unabhängig zu den Signaleinbrüchen der Messsignale des zweiten Detektors sind.

Die erfindungsgemäße Vorrichtung verbindet somit erstmals eine Vorrichtung zur interferometrischen Vermessung eines Objekts mit einer Auswertung nach dem Prinzip der Empfangs-Diversität derart, dass anhand eines Gütekriteriums, welches eine Bewertung der Güte der Messdaten des ersten Detektors im Vergleich mit der Güte der Messdaten des zweiten Detektors ermöglicht, eine Auswertung erfolgt, welche abhängig von den jeweils ermittelten Gütewerten aus entweder lediglich einem Messsignal von einem der beiden Detektoren oder einem kombinierten Messsignal beider Detektoren besteht. Hierzu weist die erfindungsgemäße Vorrichtung zumindest zwei Detektoren auf, auf denen jeweils ein Empfangsteilstrahl mit einem Referenzteilstrahl überlagert wird.

Das erfindungsgemäße Verfahren zur interferometrischen Vermessung eines Objekts umfasst die Verfahrensschritte:

-    Erzeugen eines Ausgangsstrahls mittels einer Strahlungsquelle;

-    Aufspalten des Ausgangsstrahls in mindestens einen Mess- und mindestens einen Referenzstrahl;

-    Beaufschlagen mindestens eines Messpunktes auf dem Objekt mit dem Messstrahl als Sendestrahl und

-    Überlagern des von dem Objekt zumindest teilweise reflektierten und/oder gestreuten Messstrahls als Empfangsstrahl mit dem Referenzstrahl auf einer Detektionsfläche eines ersten Detektors unter Ausbildung einer optischen Interferenz, zur Bestimmung der Bewegung und/oder Geschwindigkeit der Oberfläche des Objekts.

Diese Referenzschritte sind bei dem aus dem Stand der Technik bekannten Messverfahren, insbesondere dem Vibrometer-Messverfahren, bekannt.

Wesentlich ist, dass der Ausgangsstrahl in einen Messstrahl, einen ersten Referenzteilstrahl und mindestens einen zweiten Referenzteilstrahl und der Empfangsstrahl in einen ersten Empfangsteilstrahl und mindestens einen zweiten Empfangsteilstrahl aufgeteilt wird. Der erste Empfangsteilstrahl wird mit dem ersten Referenzteilstrahl auf der Detektionsfläche des ersten Detektors und der zweite Empfangsteilstrahl wird mit dem zweiten Referenzteilstrahl auf einer Detektionsfläche eines zweiten Detektors überlagert, jeweils unter Ausbildung einer optischen Interferenz. Die Messsignale des ersten und den zweiten Detektors werden nach dem Prinzip der Empfangs-Diversität derart ausgewertet, dass anhand eines Gütekriteriums, welches eine Bewertung der Güte der Messdaten des ersten Detektors im Vergleich mit der Güte der Messdaten des zweiten Detektors ermöglicht, eine Auswertung erfolgt, welche abhängig von den jeweils ermittelten Gütewerten aus entweder lediglich einem Messsignal von einem der beiden Detektoren oder einem kombinierten Messsignal beider Detektoren besteht.

Das erfindungsgemäße Verfahren weist somit die vorhergehend bei Beschreibung der erfindungsgemäßen Vorrichtung genannten Vorteile auf.

Das erfindungsgemäße Verfahren ist vorzugsweise zur Durchführung mittels einer erfindungsgemäßen Vorrichtung bzw. einer vorteilhaften Ausgestaltung hiervon ausgebildet. Die erfindungsgemäße Vorrichtung ist vorzugsweise zur Durchführung des erfindungsgemäßen Verfahrens bzw. einer vorteilhaften Ausgestaltung hiervon ausgebildet.

Insbesondere erfolgt bevorzugt bei dem erfindungsgemäßen Verfahren eine Aufteilung des Empfangsstrahls hinsichtlich mindestens eines der Kriterien a) Polarisation, b) räumliche Aufteilung und c) Aufteilung hinsichtlich Strahlmoden wie vorhergehend beschrieben.

Die Vorrichtung umfasst vorzugsweise mindestens ein optisches Strahlteilmittel, welches im Strahlengang des Empfangsstrahls und/oder des ersten und/oder des zweiten Empfangsteilstrahls angeordnet und derart ausgebildet ist, dass mit erstem und zweitem Detektor unterschiedliche Polarisationsanteile und/oder unterschiedliche Raumteile und/oder unterschiedliche Moden des Empfangsstrahls auswertbar sind.

In dieser vorzugsweisen Ausführungsform wird somit die Auftrennung hinsichtlich der beiden Strahlbestandteile mittels des optischen Strahlteilmittels durchgeführt, sodass in lichteffizienter Weise eine Aufteilung des entsprechenden Strahls und eine Aufteilung hinsichtlich der Information, insbesondere nach einem der vorgenannten Kriterien erfolgt.

Es liegt im Rahmen der Erfindung, lediglich einen oder mehrere Teilstrahlen mittels optischer Komponenten zu beeinflussen, um eine Auswertung nach dem Prinzip der Empfangs-Diversität zu ermöglichen. So ist es beispielsweise möglich, dass lediglich im Strahlengang des ersten und/oder des zweiten Referenzstrahls entsprechende optische Mittel, wie beispielsweise Polarisationsregler, angeordnet sind. Denn eine Interferenz bei Überlagerung von den einander zugeordneten Referenz- und Empfangsteilstrahlen findet typischerweise lediglich hinsichtlich gleichartig ausgeprägter Komponenten der beiden Strahlen statt. Ist beispielsweise der erste Referenzteilstrahl linear in einer vorgegebenen Raumrichtung polarisiert, so wird typischerweise mittels des ersten Detektors eine Interferenz und demzufolge ein entsprechendes Messsignal auch nur hinsichtlich gleichartig polarisierter Komponenten des ersten Empfangsteilstrahls erfolgen.

Es liegt demnach im Rahmen der Erfindung, beispielsweise einen oder beide Referenzteilstrahlen mittels optischer Mittel, insbesondere optischer Filter, zu beeinflussen, um die an den ersten Detektor ausgeprägte Interferenz hinsichtlich des beeinflussenden Informationsgehaltes des Empfangsteilstrahls von der vom zweiten Detektor ausgebildeten Interferenz zu unterscheiden. Vorteilhaft ist es jedoch, den ersten und/oder den zweiten Empfangsteilstrahl mittels optischer Mittel, insbesondere mittels optischer Filter, zu beeinflussen. Auf diese Weise kann das gleiche Ergebnis erzielt werden, jedoch wird hierbei typischerweise eine Auswertung mit einem geringeren Intensitätsverlust ausgehend von der Intensität des eingehenden Empfangsstrahls verglichen mit der letztendlich zur Auswertung beitragenden Intensität des ersten und zweiten Empfangsteilstrahls erzielt.

In einer besonders vorteilhaften Ausführungsform ist daher im Strahlengang des Empfangsstrahls ein optischer Strahlenteiler angeordnet, welcher einerseits den Empfangsstrahl in den ersten Empfangsteilstrahl und den zweiten Empfangsteilstrahl aufteilt und zusätzlich die gewünschte Auftrennung erzielt, insbesondere zusätzlich eine Auftrennung hinsichtlich der Polarisationskomponenten und/oder der räumlichen Komponenten und/oder der Moden des Empfangsstrahls bewirkt.

So sind beispielsweise sogenannte Polarisationsstrahlteiler bekannt, welche einen einfallenden Strahl in zwei Teilstrahlen mit unterschiedlichen Polarisationen, das heißt mit aufgetrennten Polarisationsanteilen des anfallenden Strahls, aufteilen. Ein solcher vorbekannter Polarisationsstrahlteiler kann in einfacher und kostengünstiger Weise eine gewünschte Aufteilung des Empfangsstrahls in ersten und zweiten Empfangsteilstrahl bei der erfindungsgemäßen Vorrichtung bewirken.

Bei Ausbildung der erfindungsgemäßen Vorrichtung hinsichtlich einer Aufteilung des Empfangsstrahls gemäß Kriterium a), das heißt hinsichtlich der Polarisationsanteile, umfasst die Strahlteilervorrichtung ein Polarisationsmittel, welches Polarisationsmittel derart ausgebildet ist, dass mittels des ersten und zweiten Detektors zueinander orthogonal polarisierte Anteile des Empfangsstrahls auswertbar sind. Die Bezeichnung "orthogonal polarisierte Anteile" bezeichnet hierbei und im Folgenden alle Polarisationszustände, die sich durch eine beliebige Phasenverzögerungsplatte, vorzugsweise ohne Intensitätsverlust, aus linear senkrecht polarisierten Zuständen erzeugen lassen. Beispielsweise stellen senkrecht zueinander stehende, lineare Polarisationsanteile solche orthogonal polarisierte Anteile dar. Ebenso stellen gegenläufige zirkulare Polarisationsanteile solche orthogonal polarisierte Anteile dar. Ebenso stellen zwei unterschiedlich elliptisch polarisierte Polarisationsanteile orthogonal polarisierte Anteile dar, sofern die beiden elliptisch polarisierten Anteile mittels einer Phasenverzögerungsplatte ohne Intensitätsverlust in senkrecht zueinander stehende linear polarisierte Polarisationsanteile überführbar sind.

Insbesondere umfasst das vorgenannte Polarisationsmittel bevorzugt einen Polarisationsstrahlteiler, welcher im Strahlengang des Empfangsstrahls angeordnet ist, sodass der Empfangsstrahl in den ersten Empfangsteilstrahl und den zweiten Empfangsteilstrahl aufgespalten wird und erster und zweiter Empfangsteilstrahl unterschiedliche Polarisationskomponenten des Empfangsstrahls umfassen, bevorzugt orthogonal polarisierte Anteile des Empfangsstrahls umfassen.

Die Verwendung eines Polarisationsstrahlteilers stellt - wie zuvor bereits ausgeführt - eine kostengünstige Realisierung dar.

Insbesondere vorteilhaft bei der vorgenannten Ausbildung der erfindungsgemäßen Vorrichtung ist, dass der Polarisationsstrahlteiler zusätzlich im Strahlengang des Referenzstrahls angeordnet ist, sodass mittels des Polarisationsstrahlteilers der Referenzstrahl in den ersten und zweiten Referenzteilstrahl aufgespalten wird.

Die Verwendung lediglich eines Polarisationsstrahlteilers zur Aufteilung und Polarisationsaufteilung sowohl des Referenzstrahls als auch des Empfangsstrahls stellt eine kostengünstige und platzsparende Realisierung dar. Insbesondere muss in dieser Variante lediglich dieser eine Strahlteiler im Strahlengang zur exakten Überlagerung von Mess- und Referenzstrahlen justiert werden, sodass sich, verglichen mit anderen Aufbauten, die Justierung der optischen Komponenten vereinfacht. Der Referenzstrahl weist hierbei vorzugsweise einen Polarisationszustand auf, der durch den PBS in zwei im Wesentlichen gleich starke (hinsichtlich der Intensität) Strahlen aufgeteilt wird. In den überlagerten Strahlen(-paaren) die den einzelnen Detektoren zugeordnet sind liegen die Polarisationen von Mess- und Referenzstrahl senkrecht zueinander. Ohne Leistungsverlust lassen sich diese Strahlen(-paare) mit jeweils einer Halbwellenplatte und einem PBS in jeweils ein Pärchen von Strahlen umwandeln, in denen die Polarisationen parallel und damit interferenzfähig sind und zwischen denen ein 180° Phasenunterschied in der aufgeprägten Interferenzmodulation vorliegt. Solche Paare von Strahlen lassen sich vorteilhaft mit einem differentiellen Detektor in elektrische Signale wandeln.

Vorzugsweise liegen bei der beschriebenen Ausführungsform der erfindungsgemäßen Vorrichtung die optischen Strahlachsen von Sende- und Empfangsstrahl zumindest zwischen einem Strahlausgang der Vorrichtung und dem Objekt räumlich getrennt nebeneinander, vorzugsweise parallel nebeneinander.

Hierdurch wird in einfacher Weise eine räumliche Trennung zwischen Mess- und Empfangsstrahl im Strahlengang der Vorrichtung möglich.

Insbesondere ist es hierbei vorteilhaft, dass im Strahlengang von Messstrahl und Empfangsstrahl eine Sende-/Empfangslinse, wie zuvor beschrieben, insbesondere als Bestandteil eines Objektivs, angeordnet ist. Bevorzugt durchdringen die Strahlachsen von Mess- und Empfangsstrahl parallel und räumlich getrennt eine Apertur der Sende-/Empfangslinse.

Um hierbei eine optimale Ausnutzung der Apertur und damit wie zuvor beschrieben eine optimale Lichtintensität und letztendlich Signalstärke des Messsignals zu erzielen, ist es vorteilhaft, dass das Strahlintensitätsprofil von Mess- und/oder Empfangsstrahl, bevorzugt von beiden Strahlen, derart geformt ist, dass die Apertur der Sende-/Empfangslinse überwiegend genutzt wird. Bei dieser vorzugsweisen Ausführungsform wird somit vermieden, dass Teilbereiche der Apertur der Sende-/Empfangslinse nicht oder nur mit geringer Intensität von Mess- oder Empfangsstrahl durchdrungen werden. Insbesondere ist es hierbei vorteilhaft, dass das Strahlintensitätsprofil von Mess- oder Empfangsstrahl, bevorzugt von beiden Strahlen elliptisch, insbesondere mit einem Achsenverhältnis im Bereich von 1:1,5 bis 1:2,5 ausgebildet ist. Ziel dieser vorteilhaften Ausbildung ist, die Apertur der Sende-/Empfangslinse durch den Sende- und Empfangsstrahl möglichst "auszufüllen". Das Nebeneinanderanordnen zweier Strahlen mit elliptischem Strahlintensitätsprofil, wobei die Hauptachsen der Ellipsen vorzugsweise parallel zueinander liegen.

Die erfindungsgemäße Vorrichtung umfasst vorzugsweise eine Signalverarbeitungseinheit, welche Signalverarbeitungseinheit ausgebildet ist, um ein kombiniertes Ausgangssignal aus den Messdaten des ersten und zweiten Detektors zu erzeugen.

Mittels der Signalverarbeitungseinheit wird somit die Auswertung der Messsignale der beiden Detektoren nach dem Prinzip der Empfangs-Diversität ermöglicht.

Wie zuvor beschrieben, ist es bei der Auswertung der Messsignale nach dem Prinzip der Empfangs-Diversität wesentlich, dass sowohl das Messsignal des ersten Detektors als auch das Messsignal des zweiten Detektors gemäß eines Gütekriteriums bewertet wird und abhängig von den beiden Gütekriterien ein Signal gebildet wird, welches letztendlich das auszuwertende Ausgangssignal darstellt.

Hierbei wird entweder, nach Art eines binären Schalters stets dasjenige Signal für die Auswertung verwendet, welches die höhere Gütebewertung aufweist.

Oder es wird ein kombiniertes Ausgangssignal aus dem Messsignal des ersten Detektors und dem Messsignal des zweiten Detektors gebildet, wobei eine Wichtung anhand der vorbeschriebenen Gütebewertung erfolgt. Das Gütesignal wird abhängig von der Signalstärke des Messsignals gebildet, sodass der Detektor, welcher eine höhere Signalstärke des Messsignals aufweist, eine höhere Gütebewertung erhält, verglichen mit dem anderen Detektor mit einer geringeren Signalstärke des Messsignals.

Die Gütebewertung wird vorzugsweise ständig durchgeführt. Bei praktischer Umsetzung beispielsweise durch Implementierung in einer rechnergestützten Auswerteeinheit wird typischerweise eine diskrete Bewertung an zeitnah aufeinanderfolgenden Bewertungspunkten durchgeführt. Typischerweise wird hierbei die Bewertung mit einer Taktrate im Bereich von 1kHz bis 100kHz ausgeführt.

Insbesondere ist es vorteilhaft, eine Gütebewertung des Messsignals des ersten Detektors und des Messsignals des zweiten Detektors unter Berücksichtigung der Signalleistung und/oder der Amplitude des Messsignals durchzuführen.

Hierbei ist es vorteilhaft, das für das erste Messsignal ein erster Wichtungsfaktor und für das zweite Messsignal ein zweiter Wichtungsfaktor gebildet wird, welche Wichtungsfaktoren komplementär zueinander und jeweils abhängig vom ersten und zweiten Messsignal, vorzugsweise abhängig von der Amplitude des ersten und des zweiten Messsignals oder der Leistung des ersten und zweiten Messsignals gebildet werden. Insbesondere ist es vorteilhaft, dass die Wichtungsfaktoren derart gebildet werden, dass jeweils das Messsignal mit der größeren Amplitude eine höhere Wichtung erhält als das mit der niedrigeren Amplitude. Eine Vielzahl von mathematischen Formulierungen ist denkbar die dieses Prinzip erfüllen. Eine besonders bevorzugte Realisierung ist es die Wichtungsfaktoren so zu berechnen, dass ihr Verhältnis gleich ist dem Verhältnis der elektrischen Signalamplituden.

Für eine optimale Einstellung der erfindungsgemäßen Vorrichtung und für eine optimale Durchführung des erfindungsgemäßen Verfahrens ist es vorteilhaft, dass der Polarisationszustand des Mess- und/oder Empfangsstrahls mittels einer optischen Komponente derart beeinflusst wird, dass die Empfangskanäle beider Detektoren während der Vermessung eines metallisch spiegelnden Objekts im Wesentlichen gleiche Signalstärken aufweisen. Insbesondere ist es vorteilhaft, dass ein optisches Mittel aufweisend eine optische Verzögerungsplatte verwendet wird.

In dieser vorzugsweisen Ausführungsform erfolgt somit eine "Vorab"-Optimierung derart, dass als Optimierungsstandard ein Messobjekt mit einer metallisch spiegelnden Oberfläche verwendet wird und mittels eines optischen Mittels, vorzugsweise mittels einer optischen Verzögerungsplatte, der Mess- und/oder Empfangsstrahl hinsichtlich des Polarisationszustandes derart beeinflusst wird, dass während des Messens der metallisch spiegelnden Oberfläche der erste und der zweite Detektor im Wesentlichen gleiche Signalstärken aufweisen.

Durch diesen Abgleich ergibt sich der Vorteil, dass die Strahlwege zu beiden Detektoren symmetrisch justiert werden können um gleiche Signalstärke zu liefern. Beide Kanäle werden dann auf allen Oberflächenarten im Mittel gleiche Signalstärken liefern und gleichermaßen zum Gesamtsignal beitragen.

Wie zuvor bereits ausgeführt, ist das Interferometer vorzugsweise als heterodynes Interferometer ausgebildet. Insbesondere weist das Interferometer bevorzugt eine optische Frequenzschiebeeinheit auf, welche vorzugsweise als Braggzelle ausgebildet ist. Die Frequenzschiebeeinheit ist vorzugsweise im Strahlengang des Mess- und/oder Referenzstrahls angeordnet.

Hierdurch kann die zuvor beschriebene an sich bekannte heterodyne Ausbildung erzielt werden.

Weitere vorzugsweise Merkmale und Ausführungsformen des erfindungsgemäßen Verfahrens und der erfindungsgemäßen Vorrichtung werden nachfolgend anhand von Figuren und Ausführungsbeispielen beschrieben.

Dabei zeigt:

Figur 1    ein erstes Ausführungsbeispiel einer erfindungsgemäßen Vorrichtung, bei welcher ein Sende- und ein Empfangsstrahl koaxial übereinander liegen;

Figur 2    ein zweites Ausführungsbeispiel einer erfindungsgemäßen Vorrichtung, bei welcher Sende- und Empfangsstrahl nebeneinander liegen;

Figur 3    insgesamt vier Frontalansichten einer Sende-/Empfangslinse mit unterschiedlichen Anordnungen von Sende- und Empfangsstrahl und unterschiedlichen Strahlprofilen;

Figur 4    ein drittes Ausführungsbeispiel einer erfindungsgemäßen Vorrichtung, wobei schematisch Komponenten einer Auswerteeinheit dargestellt sind;

Figur 5    ein heterodynes Laser-Vibrometer gemäß Stand der Technik;

Figur 6    eine Teilkomponente eines vierten Ausführungsbeispiels einer erfindungsgemäßen Vorrichtung, bei welcher eine räumliche Aufteilung eines Empfangsstrahls erfolgt;

Figur 7     ein fünftes Ausführungsbeispiel einer erfindungsgemäßen Vorrichtung in Teilkomponentendarstellung, bei welcher eine räumliche Aufteilung des Empfangsstrahls erfolgt;

Figur 8     ein sechstes Ausführungsbeispiel einer erfindungsgemäßen Vorrichtung, bei welcher eine räumliche Aufspaltung des Empfangsstrahls erfolgt und

Figur 9     ein siebtes Ausführungsbeispiel einer erfindungsgemäßen Vorrichtung, bei welcher eine Aufteilung des Empfangsstrahls hinsichtlich der Strahlmoden erfolgt.

Sämtliche Figuren stellen schematische Zeichnungen dar, welche nicht maßstabsgetreu sind. Gleiche Bezugszeichen bezeichnen in den Figuren gleiche oder gleichwirkende Elemente.

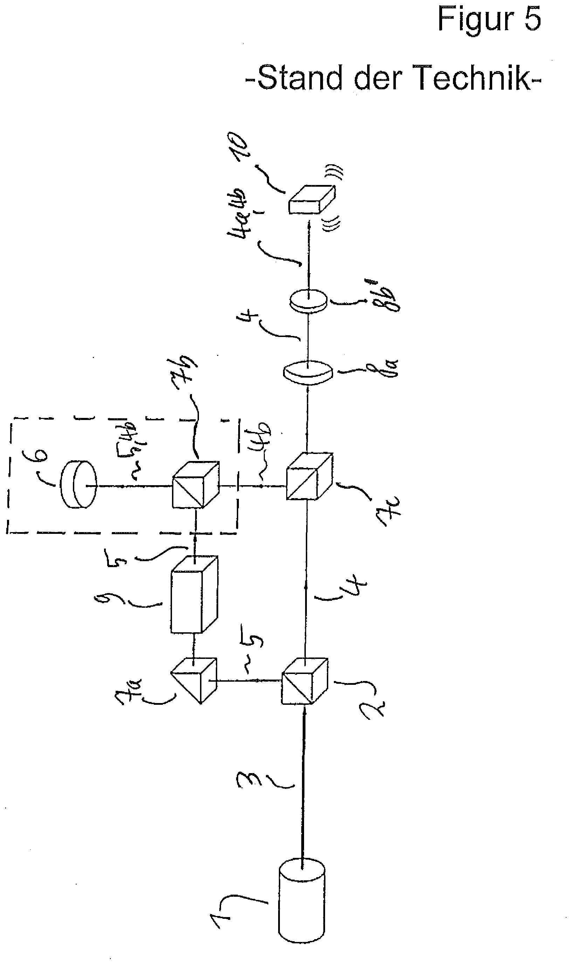

In Figur 5 ist eine Vorrichtung zur interferometrischen Vermessung eines Objekts dargestellt, welche aus dem Stand der Technik bekannt und als Vibrometer ausgebildet ist. Die Vorrichtung umfasst eine als Laser ausgebildete Strahlungsquelle 1 zur Erzeugung eines als Laserstrahl ausgebildeten Ausgangsstrahls 3, eine als Strahlteilerwürfel ausgebildete Strahlteilervorrichtung 2 zur Aufteilung des Ausgangsstrahls 3 in einen Messstrahl 4 und einen Referenzstrahl 5.

Die Vorrichtung umfasst weiterhin eine optische Überlagerungsvorrichtung und einen ersten Detektor 6.

Die optische Überlagerungsvorrichtung umfasst ein Prisma 7a sowie optische Strahlteiler 7b und 7c.

Die Vorrichtung weist weiterhin einen Strahlausgang für den Messstrahl 4 auf, welcher als Objektiv ausgebildet ist. Das Objektiv umfasst eine optische Linse 8a und die Viertelwellenplatte 8b', wobei die optische Linse 8a als Sende-/Empfangslinsensystem ausgebildet ist.

Das Interferometer gemäß Figur 5 ist als heterodynes Interferometer ausgebildet. Hierzu ist eine Braggzelle 9 im Strahlengang des Referenzstrahls 5 angeordnet.

Der mittels der als Laser ausgebildeten Strahlungsquelle 1 erzeugte Laserstrahl (mit einer Wellenlänge von z.B. 633nm) wird mittels der Strahlteilvorrichtung 2 in den Messstrahl 4 und den Referenzstrahl 5 aufgeteilt. Der Messstrahl 4 durchläuft den optischen Strahlteiler 7c, die optischen Linsen 8a und wird von der Viertelwellenplatte 8b' in zirkulare Polarisation gewandelt und tritt dort als Sendestrahl 4a aus der Vorrichtung aus und trifft auf ein zu vermessendes Objekt 10.

Der von dem Objekt 10 zumindest teilweise reflektierte Sendestrahl 4a trifft als Empfangsstrahl 4b wieder auf die Viertelwellenplatte 8b'. Bei der Reflektion des Sendestrahls 4a an einer spiegelnden Oberfläche wurde die zirkulare Polarisation in ihrem Drehsinn umgekehrt. Nach erneutem Passieren der Viertelwellenplatte ist die Polarisationsrichtung nun um 90° gedreht. Nach Passieren der Empfangslinse 8a wird der Strahl nun von dem Polarisationsstrahlenteiler 7c seitlich reflektiert und wird über den optischen Strahlteiler 7b auf den ersten Detektor 6 geleitet.

Der Referenzstrahl 5 wird über das Prisma 7a geleitet, durchtritt die Braggzelle 9 und wird über den Strahlteiler 7b auf einer Detektorfläche des ersten Detektors 6 mit dem Empfangsstrahl 4b unter Ausbildung einer Interferenz überlagert.

Mit einer (nicht dargestellten) Auswerteeinheit werden die Messsignale des ersten Detektors 6 ausgewertet, indem durch Phasendemodulation des modulierten Trägersignals Bewegungen des Objekts in Richtung des Empfangsstrahls 4b und durch Frequenzdemodulation die Geschwindigkeit der sich bewegenden Oberfläche des Objekts 10 ermittelt werden.

Das Grundprinzip des Vibrometers gemäß Figur 5 liegt auch den Ausführungsbeispielen der erfindungsgemäßen Vorrichtung zugrunde. Zur Vermeidung von Wiederholungen wird daher im Folgenden auf die wesentlichen Unterschiede eingegangen.

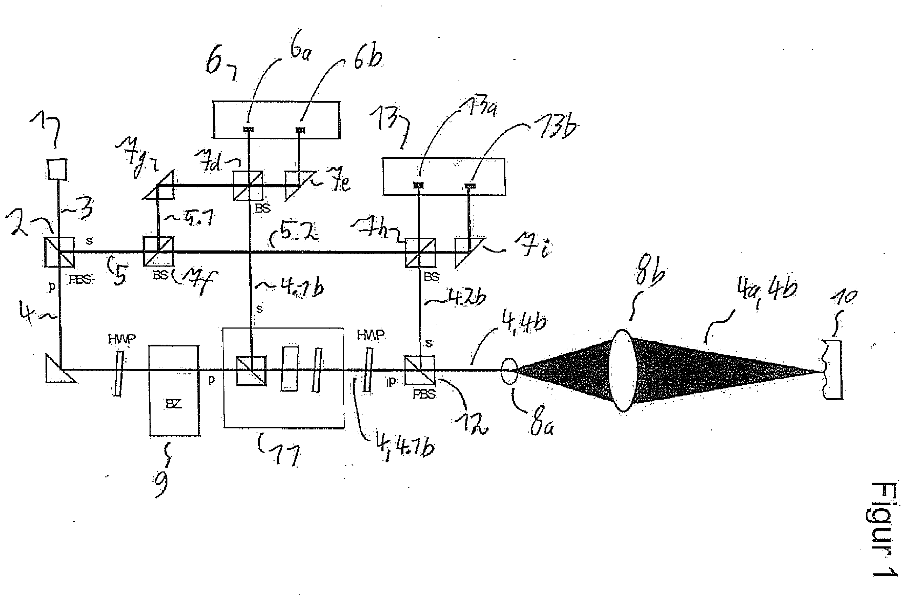

Bei dem in Figur 1 dargestellten ersten Ausführungsbeispiel einer erfindungsgemäßen Vorrichtung liegen Sendestrahl 4a und Empfangsstrahl 4b koaxial übereinander. Bei dieser vorteilhaften Ausgestaltung ist es insbesondere in vorteilhafter Weise möglich, Sende- und Empfangsstrahl über eine gemeinsame Linse, eine Sende-/Empfangslinse zu führen. Der Messstrahl tritt somit über die Sende-/Empfangslinse aus dem Strahlengang der erfindungsgemäßen Vorrichtung aus, verläuft als Sendestrahl zu dem Objekt, wird von diesem reflektiert und/oder gestreut, läuft als Empfangsstrahl zu der erfindungsgemäßen Vorrichtung zurück und tritt über die Sende-/Empfangslinse wieder in den Strahlengang der Vorrichtung ein. Hierdurch wird eine optimale Ausnutzung der Apertur der Sende-/Empfangslinse bzw. eines die Sende-/Empfangslinse enthaltenden Objektivs, ermöglicht. Eine optimale Ausnutzung der Apertur ermöglicht eine optimale Lichtausbeute und eine optimale Signalstärke,

Ergänzend zu dem vorbekannten Standardaufbau gemäß Figur 5 ist bei dem Ausführungsbeispiel gemäß Figur 1 ein magnetooptischer Zirkulator 11 im Strahlengang des Messstrahls 4 angeordnet. Der Messstrahl 4 durchläuft somit die Braggzelle 9, den Zirkulator 11 und trifft nach Durchlaufen des Objektivs, welches die optischen Linsen 8a und 8b umfasst, auf das zu vermessende Objekt 10 (Sendestrahl 4a). Der von dem Objekt 10 zumindest teilweise reflektierte oder gestreute Sendestrahl 4a tritt als Empfangsstrahl 4b über die optische Linse 8b wieder in den Strahlengang der Vorrichtung ein und wird mittels des als Polarisationsstrahlteiler PBS ausgebildeten Polarisationsmittels 12 in die Polarisationskomponenten p und s aufgespaltet.

Die Polarisationskomponente p durchläuft als erster Empfangsteilstrahl 4.1b wiederum den Zirkulator und ändert hierdurch die Polarisierung in eine s-Polarisierung und wird mittels eines Polarisationsstrahlteilers des Zirkulators in Richtung des ersten Detektors 6 abgelenkt.

Der erste Detektor 6 umfasst wiederum zwei Detektoren 6a und 6b. Mittels eines weiteren optischen Strahlteilers 7d wird der erste Empfangsteilstrahl 4.1b in wiederum zwei Teilstrahlen aufgeteilt, wobei ein erster Teilstrahl auf dem Detektor 6a des ersten Detektors 6 und ein zweiter Teilstrahl über ein Prisma 7e auf den Detektor 6b des Detektors 6 geleitet wird.

Der Referenzstrahl 5 wird über einen weiteren Strahlteiler 7f aufgespaltet, wobei ein Teil als erster Referenzteilstrahl 5.1 über ein weiteres Prisma 7g und den Strahlteiler 7g auf den Detektor 6a des ersten Detektors 6 geleitet wird, wobei der Referenzteilstrahl 5.1 mittels des Strahlteilers 7b wiederum aufgeteilt wird, sodass ein zweiter Teil des ersten Referenzteilstrahls 5.1 über das Prisma 7e auf dem Detektor 6b des ersten Detektors 6 geleitet wird.

Der Detektor 6 weist somit zwei Detektoren 6a und 6b auf, an welchen jeweils eine Überlagerung eines Teils des ersten Empfangsteilstrahls 4.1b mit einem Teil des ersten Referenzteilstrahls 5.1, jeweils unter Ausbildung einer Interferenz, erfolgt.

Die Vorrichtung gemäß dem in Figur 1 dargestellten ersten Ausführungsbeispiel umfasst weiterhin einen zweiten Detektor 13, der ebenfalls zwei Detektoren 13a und 13b umfasst.

Die mittels des Polarisationsmittels 12 abgetrennte s-Komponente des Empfangsstrahls 4b wird als zweiter Empfangsteilstrahl 4.2b in Richtung des zweiten Detektors 13 geleitet, trifft auf einen weiteren optischen Strahlteiler 7h und wird analog zu der Balanced-Detektor-Anordnung des ersten Detektors 6 mit einem Teilstrahl auf Detektor 13a und mit einem zweiten Teilstrahl über ein weiteres Prisma 7i auf den Detektor 13b geleitet.

Der Referenzstrahl 5 wird mittels des optischen Strahlteilers 7f in den zuvor beschriebenen ersten Referenzteilstrahl 5.1 und einen zweiten Referenzteilstrahl 5.2 aufgeteilt und der zweite Referenzteilstrahl 5.2 trifft auf den Strahlteiler 7h, wird hier nochmals aufgeteilt und einerseits auf den Detektor 13a und andererseits über das Prisma 7i auf den Detektor 13b geleitet.

Auch an dem zweiten Detektor 13 sind somit an den Detektoren 13a und 13b jeweils Teilstrahlen des zweiten Empfangsteilstrahls 4.2b mit Teilstrahlen des zweiten Referenzteilstrahls 5.2 überlagert.

Die in Figur 1 dargestellte Vorrichtung gemäß eines ersten Ausführungsbeispiels der erfindungsgemäßen Vorrichtung weist gegenüber dem Aufbau gemäß Figur 5 einige Vorteile auf:
Zunächst können beide Polarisationsrichtungen (p und s) des Empfangsstrahls 4b detektiert werden, einerseits mit dem ersten Detektor 6 und andererseits mit dem zweiten Detektor 13. Bei Messungen auf einer großen Klasse von Oberflächentypen, allen nichtmetallischen rauen Oberflächen, treten beide Polarisationsrichtungen auf. Dann führt die Detektion beider Polarisationsrichtungen zu einer Erhöhung der ausgewerteten Lichtintensität und es wird hiermit ein besseres Signal-Rausch-Verhältnis erzielt. Da beide Empfangsteilstrahlen aus senkrecht zueinander polarisierten Komponenten des gesamten Empfangsstrahls entstammen sind die Signaleinbrüche an dem ersten Detektor 6 statistisch unabhängig zu den Signaleinbrüchen an dem zweiten Detektor 13.

Die Ausbildung des ersten Detektors 6 mit zwei Detektoren 6a und 6b und des zweiten Detektors 13 mit zwei Detektoren 13a und 13b entspricht jeweils der an sich bekannten Ausbildung eines Detektors in der "Balanced Detektor"-Anordnung:
Die Messsignale des Detektors 6 werden in an sich bekannter Weise nach Art einer Balanced-Detektor-Anordnung aus den Messsignalen der Detektoren 6a und 6b ermittelt. Ebenso werden die Messsignale des zweiten Detektors 13 in bei Balanced-Detektoren an sich bekannter Weise aus den Messsignalen der Detektoren 13a und 13b ermittelt. Erster Detektor 6 und zweiter Detektor 13 werden daher typischerweise auch als differentielle Detektoren bezeichnet.

Wesentlich ist nun weiterhin, dass mittels einer (nicht dargestellten) Auswerteeinheit die Messsignale des ersten Detektors und des zweiten Detektors 13 nach dem Prinzip der Empfangs-Diversität ausgewertet werden.

Hierzu wird für das Messsignal des ersten Detektors 6 und für das Messsignal des zweiten Detektors 13 jeweils mittels einer Leistungsmessstufe die Leistung des modulierten Trägersignals ermittelt. Ebenso wird FM-Demodulation sowohl für das Messsignal des ersten Detektors 6 als auch für das Messsignal des ersten Detektors 13 jeweils ein Geschwindigkeitssignal erzeugt. Über eine Auswahl wird nun stets dasjenige Geschwindigkeitssignal als Ausgangssignal ausgegeben, welches dem Detektor mit der größeren Leistung zugeordnet ist.

Auf diese Weise ist die Wahrscheinlichkeit, dass ein fehlerhaftes Geschwindigkeitssignal als Ausgangssignal ausgegeben wird, erheblich reduziert, da die Messsignaleinbrüche des ersten Detektors 6 zu den Messsignaleinbrüchen des zweiten Detektors 13 statistisch unabhängig sind.

Die Strahlachsen von Sendestrahl 4a und Empfangsstrahl 4b verlaufen bei der Vorrichtung gemäß Figur 1 zwischen optischer Linse 8b und Objekt 10 parallel und übereinanderliegend, das heißt der Messstrahl 4a und der Empfangsstrahl 4b sind koaxial. Hierdurch wird eine optimale Ausnutzung der Apertur des Objektivs umfassend die optischen Linsen 8a und 8b erzielt und somit ein Verlust von Lichtintensität und damit ein Verlust von Messsignalintensität vermieden.

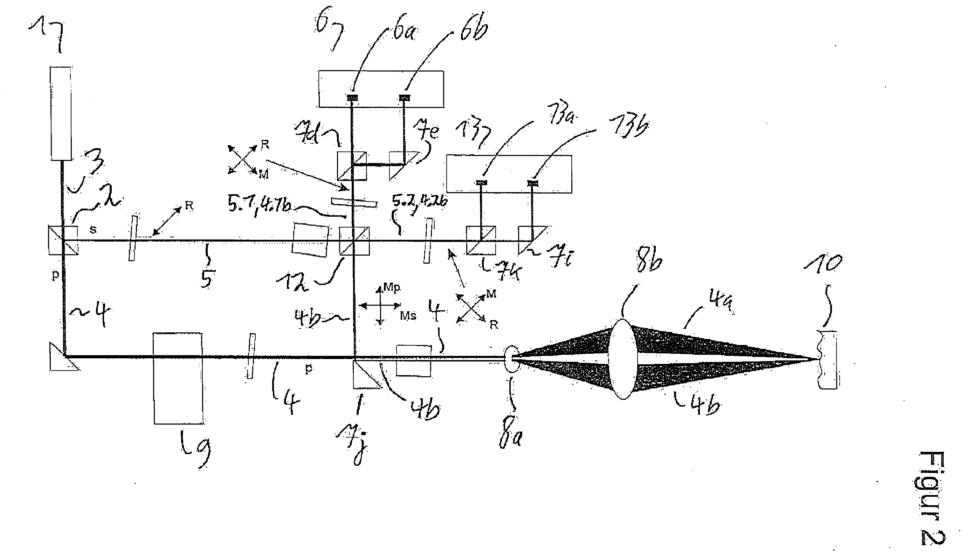

In Figur 2 ist ein zweites Ausführungsbeispiel einer erfindungsgemäßen Vorrichtung dargestellt, welche einen ersten Detektor 6 und einen zweiten Detektor 13 in analoger Ausbildung als Balanced-Detektor wie in Figur 1 dargestellt aufweist.

Im Unterschied zu dem ersten Ausführungsbeispiel verläuft bei dem in Figur 2 dargestellten zweiten Ausführungsbeispiel der Sendestrahl 4a nicht koaxial zu dem Empfangsstrahl 4b.

Zwischen der optischen Linse 8b und dem Objekt 10 verlaufen Empfangsstrahl 4b und Sendestrahl 4a zwischen Prisma 7i und optischer Linse 8a nebeneinander, mit parallelen, voneinander beabstandeten Strahlachsen Mittels der optischen Linsen 8a und 8b werden Empfangsstrahl 4b und Sendestrahl 4a auf einen Messpunkt auf dem Objekt 10 fokussiert.

Hierdurch kann in einfacher Weise mittels eines Spiegels 7j aufgrund der räumlich nebeneinander liegenden Strahlachsen der Empfangsstrahl 4b abgetrennt werden. Bei diesem Ausführungsbeispiel kann somit eine Aufteilung zwischen Empfangsstrahl 4b und Sendestrahl 4a erfolgen, ohne dass hierbei bestimmte Bedingungen an die Polarisation dieser Strahlen vorliegen müssten, denn die Aufteilung kann ohne einen Polarisationsstrahlteiler in einfacher Weise aufgrund der räumlich nebeneinander liegenden Strahlachsen der beiden Strahlen erfolgen.

Der Empfangsstrahl 4b weist somit eine gemischte Polarisation auf und wird mittels des als Polarisationsstrahlteilers ausgebildeten Polarisationsmittels 12 in den ersten Empfangsteilstrahl 4b.1 und den zweiten Empfangsteilstrahl 4.2b aufgeteilt, wobei diese beiden Empfangsteilstrahlen somit senkrecht zueinander stehende Polarisationsanteile aufweisen.

Besonders vorteilhaft bei diesem Ausführungsbeispiel ist weiterhin, dass der Referenzstrahl 5 ebenfalls über das Polarisationsmittel 12 in den ersten Referenzteilstrahl 5.1 und den zweiten Referenzteilstrahl 5.2 aufgeteilt wird.

Hierdurch ergibt sich somit der Vorteil, dass die Strahlaufteilung sowohl des Empfangsstrahls 4b als auch des Referenzstrahls 5 mit dem Polarisationsmittel 12, das heißt mit einem einzigen Polarisationsstrahlteiler erfolgt. Hierdurch gestaltet sich die Justierung der optischen Elemente erheblich einfacher.

An den Detektoren 6a und 6b des ersten Detektors 6 sowie den Detektoren 13a und 13b des zweiten Detektors erfolgt analog zu dem ersten Ausführungsbeispiel gemäß Figur 1 jeweils eine Überlagerung eines Empfangsteilstrahls mit dem zugehörigen Referenzteilstrahl unter Ausbildung einer optischen Interferenz.

Aufgrund der Anordnung gemäß Figur 2 sind nachfolgend zu den Polarisationsmittel 12 der Referenz- und Messlichtanteil jeweils senkrecht zueinander polarisiert. Damit diese Anteile miteinander interferieren können, wird vor den Detektoren jeweils ein Polarisator (nicht dargestellt) verwendet, welcher beispielsweise als Polarisationsfilter oder PBS ausgebildet sein kann. Mittels der Polarisatoren werden somit bei jedem der Detektoren 6a, 6b, 13a und 13b jeweils die Anteile von beiden enthaltenen Polarisationen in die Achsen des Detektionselementes projiziert. Dazu müssen die Achsen des Polarisators im Wesentlichen in einem Winkel von 45° zu den Polarisationen im Strahl orientiert sein bzw. müssen die Polarisationen mit Halbwellenplatten entsprechend auf die Achsen des Polarisators gedreht werden. Ebenso können beide Polarisationskomponenten mit einer Viertelwellenplatte in rechts- bzw. linkszirkular polarisierte Komponenten gewandelt werden.

Wesentlich ist, dass die jeweiligen Polarisationsanteile derart verändert werden, dass an den Detektoren 6a, 6b, 13a, 13b jeweils eine Interferenz stattfindet.

Sofern die vorgenannte Variante gewählt wird, dass jeweils mittels eines PBS die Polarisation beeinflusst wird, sind die Intensitätsmodulationen in den entstehenden Strahlen gegenphasig und können somit in vorteilhafter Weise mit einem differenziellen Detektor in entsprechende Messsignale gewandelt werden.

Das zweite Ausführungsbeispiel gemäß Figur 2 weist weiterhin den Vorteil auf, dass als wesentliche optische Komponenten Polarisationsstrahlteiler (Polarisationsmittel 12, Polarisationsstrahlteiler 7d und Polarisationsstrahlteiler 7k) verwendet werden. Es wird somit als wesentliche optische Komponente dreimal das gleiche Bauteil verwendet.

Bei dem zweiten Ausführungsbeispiel gemäß Figur 2 liegen Sendestrahl 4a und Empfangsstrahl 4b somit nicht wie bei dem ersten Ausführungsbeispiel gemäß Figur 1 koaxial übereinander, sondern die optischen Achse von Sendestrahl 4a und Empfangsstrahl 4b liegen nebeneinander. Entsprechend können auch bei der Ausgestaltung gemäß Figur 2 die Signale des ersten Detektors 6 und des zweiten Detektors 13 einem Messpunkt zugeordnet werden, da zwar Sendestrahl 4a und Empfangsstrahl 4b unterschiedlichen Raumwinkeln vor dem Objekt 10 entsprechen, jedoch von dem gleichen Messpunkt ausgehen. Auch bei dem zweiten Ausführungsbeispiel gemäß Figur 2 liegt somit eine Aufteilung gemäß der Polarisationsinformation des Empfangsstrahls vor, wie auch bei dem ersten Ausführungsbeispiel gemäß Figur 1 und keine Aufteilung hinsichtlich des Messortes.

Wie zuvor ausgeführt, ist es vorteilhaft, die numerische Apertur des Objekts, welches die optischen Linsen 8a und 8b umfasst, möglichst optimal auszunutzen, um eine möglichst hohe Lichtintensität und damit eine möglichst hohe Messsignalintensität zu erzielen.

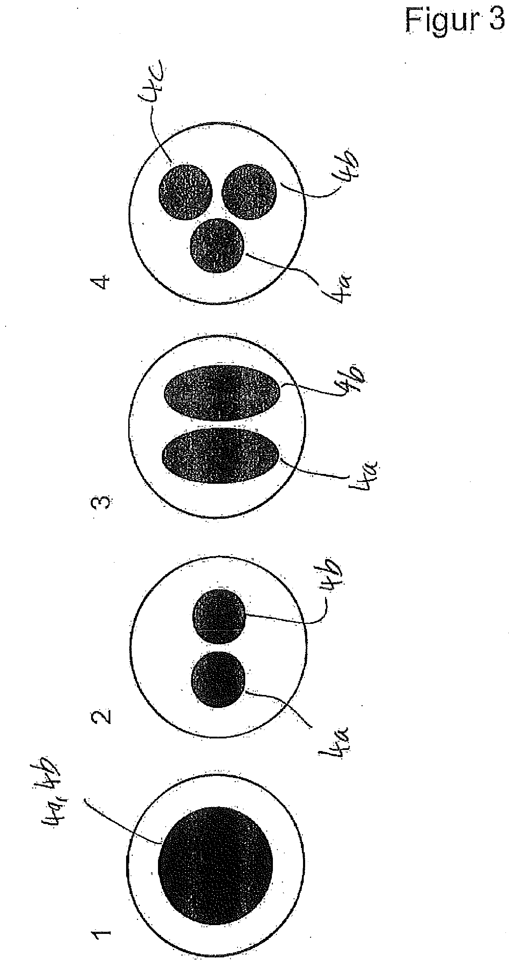

Sofern Empfangsstrahl 4b und Sendestrahl 4a koaxial zwischen Objektiv und Objekt 10 verlaufen, ist eine Anordnung gemäß der schematischen Darstellung in Figur 3.1 vorteilhaft, das heißt eine möglichst großflächige Ausnutzung der Apertur durch die beiden koaxial übereinander liegenden Strahlen Empfangsstrahl 4b und Sendestrahl 4a.

Sofern die vorteilhafte Ausgestaltung gemäß des zweiten Ausführungsbeispiels wie in Figur 2 dargestellt gewählt wird, kann eine Anordnung gemäß Teilbild Figur 3.2 gewählt werden. Hierbei liegen Sendestrahl 4a und Empfangsstrahl 4b nebeneinander hinsichtlich der Apertur des Objektivs. Es zeigt sich jedoch, dass diese keine optimale Ausnutzung der Apertur darstellt.

Vorteilhaft ist es daher, das Intensitätsprofil von Sendestrahl 4a und von Empfangsstrahl 4b elliptisch zu gestalten, wie in Teilbild Figur 3.3 dargestellt. Hierdurch wird eine erheblich bessere Ausnutzung der Apertur und damit eine höhere Intensität verglichen mit Teilbild Figur 3.2 erzielt.

Ebenso ist es möglich, mehrere Empfangsstrahlen aufzunehmen und in der Vorrichtung mit getrennten aber identischen Auswerteeinheiten auszuwerten so dass dann entsprechend mehr Kanäle zum Gesamtsignal beitragen.

Im Teilbild Figur 3.4 ist solch eine Anordnung dargestellt, mit dem Sendestrahl 4a, dem Empfangsstrahl 4b und einem zweiten Empfangsstrahl 4c. In diesem Fall erhält man insgesamt 4 unabhängige Messkanäle die nach dem Prinzip des Diversity-Empfangs erst einzeln ausgewertet werden und dann zu einem Gesamtsignal zusammengeführt werden.

Bei der vorteilhaften Ausgestaltung mit elliptischen Strahlquerschnitten gemäß Teilbild Figur 3.3 liegt das Asymmetrieverhältnis sowohl des Sendestrahls 4a als auch des Empfangsstrahls 4b im Bereich 1,5 bis 2,5.

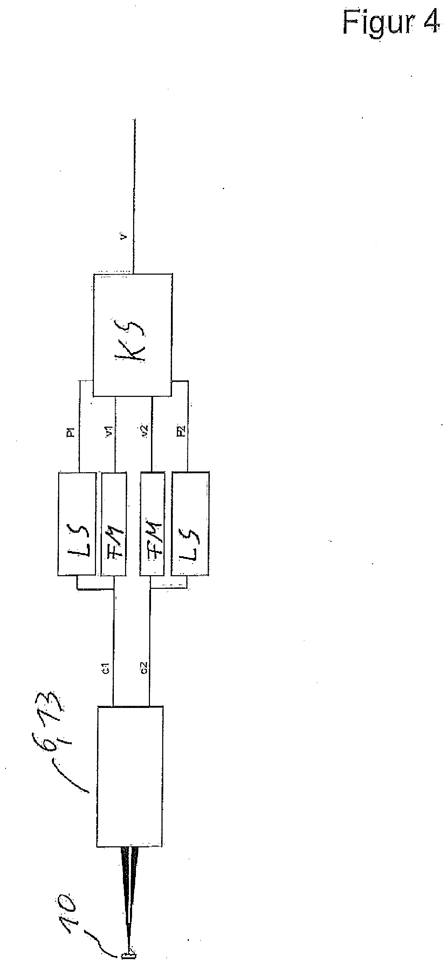

Figur 4 stellt schematisch ein Ausführungsbeispiel einer erfindungsgemäßen Vorrichtung dar, wobei lediglich die Auswerteeinheit schematisch dargestellt ist. Die Vorrichtung des dritten Ausführungsbeispiels kann hinsichtlich der optischen Komponenten beispielsweise wie das erste Ausführungsbeispiel gemäß Figur 1 oder wie das zweite Ausführungsbeispiel gemäß Figur 2 ausgebildet sein.

In der schematischen Darstellung gemäß Figur 4 sind erster Detektor 6 und zweiter Detektor 13 grafisch in einem Block zusammengefasst.

Die Signalverarbeitung erfolgt derart, dass sowohl das Messsignal c1 des ersten Detektors 6 als auch das Messsignal c2 des zweiten Detektors 13 jeweils in zweifacher Hinsicht ausgewertet werden:

Das Messsignal c1 wird beispielsweise gemäß der schematischen Darstellung in Figur 4 FM-demoduliert, sodass sich ein Geschwindigkeitssignal v1 ergibt. Ebenso wird das Messsignal c2 des zweiten Detektors 13 FM-demoduliert, sodass sich ein zweites Geschwindigkeitssignal v2 ergibt.

Wesentlich ist, dass das Messsignal c1 des ersten Detektors 13 darüber hinaus in einer Leistungsstufe (LS) einer Leistungsmessung unterzogen wird und somit die Leistung oder die Amplitude des modulierten Trägersignals ermittelt und als Signal P1 ausgegeben wird.

Ebenso wird ausgehend von dem Messsignal c2 des zweiten Detektors 13 mittels einer weiteren Leistungsmessstufe die Leistung oder Amplitude des modulierten Trägersignals ermittelt und als Signal P2 ausgegeben. Die Leistungsmessstufen werden in bevorzugter Weise die Signale P1 und P2 so erzeugen, dass diese logarithmisch von der elektrischen Signalstärke abhängen und damit einem Dezibel-Maß entsprechen.

In einer Kombinationsstufe (KS) erfolgt nun die Kombination der Geschwindigkeitssignale v1 und v2 zu einem Ausgangssignal v.

Es werden somit die vier Signale P1, v1, v2 und P2 verwendet, um ein kombiniertes Ausgangssignal v zu erzeugen, welches von höherer Verlässlichkeit ist als jedes einzelne Signal v1 oder v2.

Die bevorzugte Methode zur Kombination der Signale ist die gewichtete Mittelung der Signale v1 und v2, wobei die Gewichtungsfaktoren (Gewichtungsfaktor w1 für Signal v1 und Gewichtungsfaktor w2 für Signal v2) aus den Leistungssignalen P1 und P2 errechnet werden. Die Berechnung kann sich darstellen als:

$$v = w1 \cdot v1 + w2 \cdot v2,$$

wobei eine Normierung derart erfolgt, dass w1 + w2 = 1, das heißt die Gewichtungsfaktoren w1 und w2 sind komplementär. Die Berechnung der Gewichtungsfaktoren erfolgt wie zuvor angegeben aus den Leistungssignalen P1 und P2, das heißt P1 ist eine Funktion abhängig von P1 und P2 (w1 = f (P1, P2) und entsprechend gilt w2 = f (P2, P1)). Die Gewichtungsfaktoren w1 und w2 werden somit mit symmetrischen Funktionen hinsichtlich der Parameter P1 und P2 ermittelt. Alle vorgenannten Signale sind zeitveränderliche Größen, sodass die Berechnung bzw. Auswertung somit ständig erfolgen muss. In praktischer Ausgestaltung wird die Auswertung mit einer vorgegebenen Taktrate, insbesondere mit einem Takt von 20kHz..2MHz erfolgen.

Die Funktion (f) könnte beispielsweise im Sinne eines binären Schalters ein Umschalten auf jeweils den Kanal mit der höheren Leistung bewirken. Ebenso kann die Funktion im Sinne eines linearen Überblendens realisiert sein, beispielsweise f (x,y) = x/(x+y), sodass sich für die Gewichtungsfaktoren w1 und w2 ergibt:

$$w1 = P1/(P1 + P2)$$

und

$$w2 = P2/(P1 + P2)$$

Grundsätzlich kann das Positionssignal, das heißt die Auslenkung der Oberfläche in Richtung der Strahlachse des Empfangsstrahls durch Phasendemodulation aus den Signalen c1 und c2 gewonnen werden. Ebenso kann das Positionssignal durch Zeitintegration des Geschwindigkeitssignals gewonnen werden.

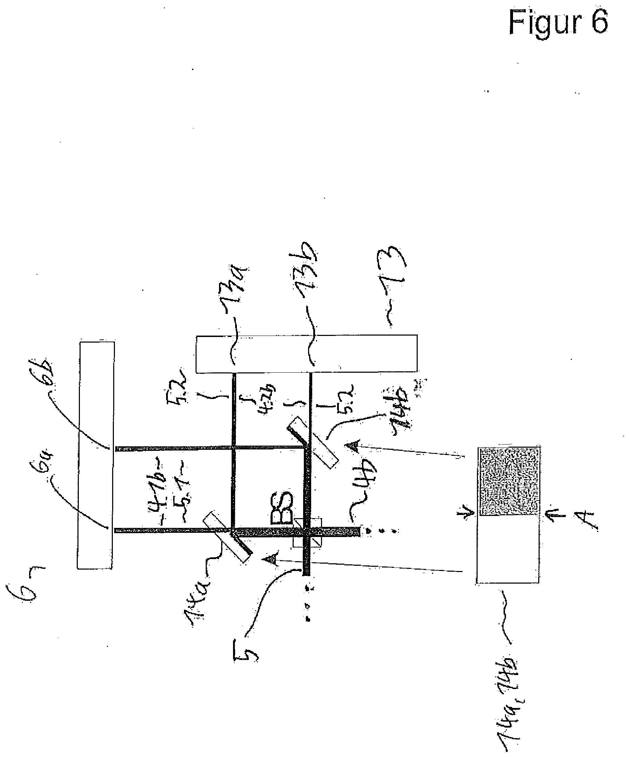

Die Figuren 6 - 8 stellen Ausführungsbeispiele 4 - 6 schematisch dar, bei denen jeweils eine räumliche Diversity realisiert ist, das heißt, dass der Empfangsstrahl hinsichtlich unterschiedlicher Strahlquerschnittsanteile aufgeteilt wird:

Der Grundaufbau der Vorrichtung kann hierbei dem Standardaufbau gemäß Figur 5 entsprechen, wobei jeweils der in Figur 5 gestrichelt umrahmte Bereich in Figur 5 ersetzt wird durch die entsprechende Darstellung in Figur 6, Figur 7 oder Figur 8.

Die Ausführungsbeispiele gemäß der Figuren 6, 7 und 8 teilen somit den Strahlquerschnitt des empfangenen Streulichts, das sich aus Beiträgen von allen beleuchteten Oberflächenpunkten ergibt, in jeweils zwei Hälften auf.

Dabei wird ein Empfangsteilstrahl als erster Empfangsstrahl 4.1b auf die Detektoren 6a und 6b des ersten Detektors und entsprechend der zweite Empfangsteilstrahl 4b, als zweiter Empfangsteilstrahl 4.2b auf die Detektoren 13a und 13b des zweiten Detektors 13 geleitet. Der Strahlquerschnitt des Empfangsstrahls 4b wird somit in den Ausführungsbeispielen der Figuren 6, 7 und 8 jeweils in mindestens zwei Unterbereiche aufgeteilt, welche Unterbereiche entweder zu den Detektoren 6a und 6b des ersten Detektors oder zu den Detektoren 13a und 13b des zweiten Detektors weitergeleitet werden.

In allen drei Figuren 6, 7 und 8 ist wiederum eine Balanced-Detektor-Anordnung realisiert, das heißt erster Empfangsteilstrahl 4.1b, zweiter Empfangsteilstrahl 4.2b sowie erster Referenzteilstrahl 5.1 und zweiter Referenzteilstrahl 5.2 werden jeweils nochmals aufgeteilt, um auf die jeweils zweiten Detektoren des ersten Detektors 6 und des zweiten Detektors 13 geleitet zu werden.

Bei dem vierten Ausführungsbeispiel gemäß Figur 6 werden die überlagerten Strahlen, deren Empfangsstrahlkomponente eine unregelmäßige Speckle-Verteilung enthält, in jeweils zwei seitlich getrennte Komponenten aufgeteilt. Die Trennung kann hierbei durch Spiegel 14a und 14b erfolgen, wobei die Spiegelkante jeweils zur Hälfte in den Strahl eingeschoben wird oder die Spiegel als teilweise verspiegelte Glasplatte ausgebildet sind. In Figur 6 ist schematisch vergrößert solch eine Ausgestaltung der Spiegel 14a und 14b als teilweise verspiegelte Glasplatte dargestellt, wobei in diesem Fall die Spiegel 14a und 14b derart in den Strahlengang von Referenzstrahl 5 und Empfangsstrahl 4b geschoben werden, dass die Trennkante A zwischen verspiegeltem und nicht verspiegeltem Bereich der Glasplatte mittig im Strahl liegt, das heißt, dass die Strahlachse in etwa auf die Grenzlinie A auftrifft.

Hierdurch wird in einfacher Weise eine räumliche Auftrennung erzielt.

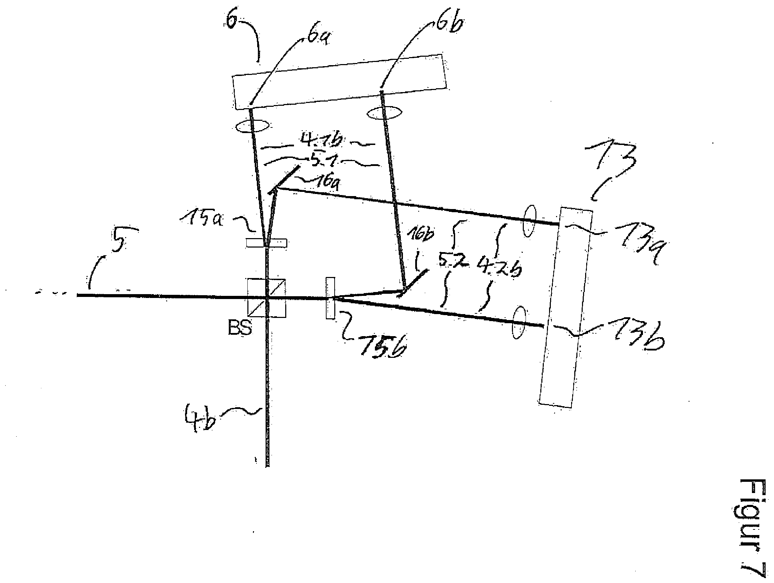

Das in Figur 7 dargestellte fünfte Ausführungsbeispiel erzielt die räumliche Auftrennung durch Mikroprismenraster 15a, 15b.

Hierbei werden somit abwechselnd schmale Streifen des Strahlprofils dem einen oder anderen Strahl zugeordnet und hierdurch die räumliche Auftrennung erzielt. Die Elemente 16a und 16b stellen Spiegel zur Strahlumlenkung dar.

Die Linsen 6a, 6b, 13a und 13b werden verwendet, wenn der Strahldurchmesser größer ist als die Fläche der verwendeten Fotodetektoren, der Strahl wird zu einem kleinen Punkt auf die Detektoren fokussiert.

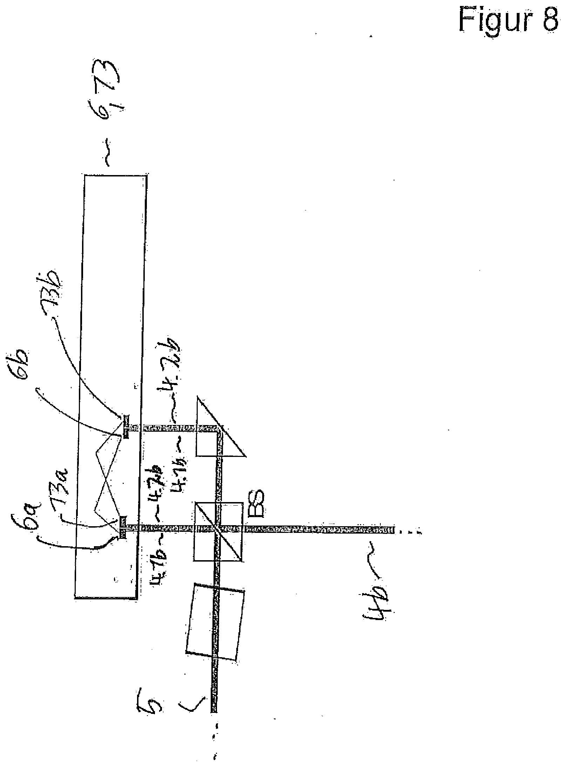

Das sechste Ausführungsbeispiel gemäß Figur 8 stellt einen Sonderfall hinsichtlich der Detektorenausbildung dar:

In diesem Fall sind die Detektoren unterteilt.

Wie in Figur 8 ersichtlich, sind der Detektor 6a des ersten Detektors 6 und der Detektor 13a des zweiten Detektors 13 unmittelbar nebeneinander angeordnet. Ebenso sind der Detektor 6b des ersten Detektors 6 und der Detektor 13b des zweiten Detektors 13 unmittelbar nebeneinander angeordnet. Solcherart geteilte Fotodetektoren sind standardmäßig kommerziell erhältlich.

Hierdurch kann in einfacher Weise eine gewünschte räumliche Auftrennung erzielt werden. Es wird somit durch die spezielle Anordnung gleichzeitig eine Balanced-Detektor-Anordnung und eine räumliche Aufteilung von Empfangsstrahl und Referenzstrahl erzielt. Hier ist somit jeweils die linke Hälfte der auf die Detektoren auftreffenden Strahlen als erster Empfangsteilstrahl 4.1b und jeweils die rechte Hälfte der auf die Detektoren auftreffenden Strahlen als zweiter Empfangsteilstrahl 4.2b definiert.

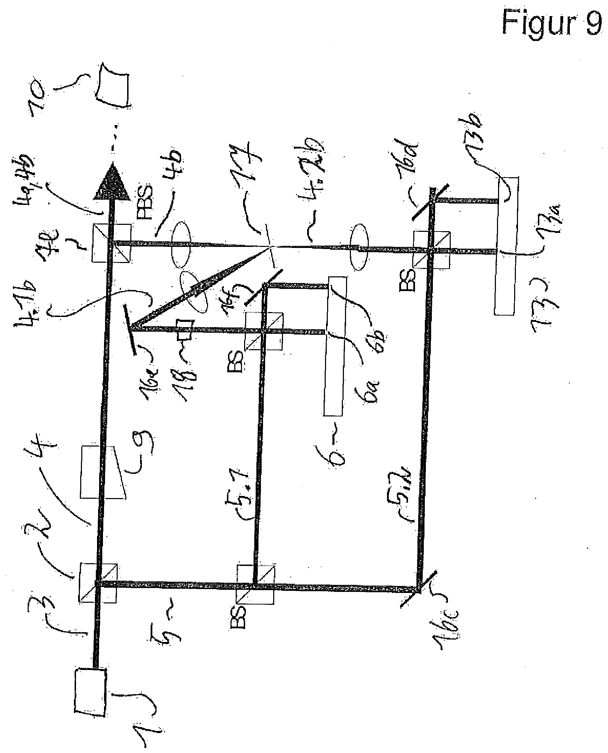

In Figur 9 ist schließlich ein siebtes Ausführungsbeispiel dargestellt, bei welchem eine Aufteilung hinsichtlich der Strahlmodenanteile des Empfangsstrahls erfolgt:

Auch hier wird ausgehend von der Strahlungsquelle 1 der Ausgangsstrahl 3 erzeugt, welcher mittels der Strahlteilervorrichtung 2 in den Messstrahl 4 und den Referenzstrahl 5 aufgeteilt wird. Der Messstrahl 4 durchläuft die Braggzelle 9 und trifft als Sendestrahl 4a auf das Objekt 10 auf. Der zumindest teilweise reflektierte oder gestreute Sendestrahl 4a trifft als Empfangsstrahl 4b auf einen Polarisationsstrahlteiler 7l auf und wird auf einen als Pinhole ausgebildeten Raumfilter 17 geleitet. Der Raumfilter 17 ist aus reflektierendem Substrat ausgebildet, sodass die Gauß-Grundmode des Empfangsstrahls 4b als erster Empfangsteilstrahl 4.2b den Raumfilter 17 durchtritt und dem ersten Detektor 13 zugeleitet wird.

Die höheren Moden des Empfangsstrahls 4b (zum Beispiel die ringförmige Mode) werden durch den Raumfilter 17 reflektiert und als zweiter Empfangsteilstrahl 4.1b dem zweiten Detektor 6 zugeleitet.

Die Zuleitung zu den Detektoren und die Umleitung des Referenzstrahls erfolgen über Spiegel 16c, 16d, 16e und 16f.

Der erste Empfangsteilstrahl 4.2b weist wie vorhergehend beschrieben die Gauß-Grundmode auf und kann daher unmittelbar eine Interferenz mit dem ersten Referenzteilstrahl 5.2 auf den Detektor 13a und den Detektor 13b des zweiten Detektors 13 ausbilden.

Der zweite Empfangsteilstrahl 4.1b muss hingegen wieder in eine Gauß-Grundmode umgewandelt werden, um eine Interferenz mit dem zweiten Referenzteilstrahl 5.1 auszubilden. Dies geschieht in dem Ausführungsbeispiel gemäß Figur 9 durch eine Phasenplatte 18, welche im Strahlengang des ersten Empfangsteilstrahls 4.1b angeordnet ist.

In den Figuren 1 - 9 bezeichnen die Abkürzungen folgende Elemente:

BS　　　Strahlteiler
PBS　　Polarisationsstrahlteiler
HWP　　Halbwellenplatte
LS　　　Leistungsmessstufe

FM       Frequenzdemodulation
KS       Kombinationsstufe

Die Kreuze bestehend aus zwei senkrecht zueinander stehenden beidseitigen Pfeilen in Figur 2 zeigen jeweils die Polarisationsrichtung von Empfangsteilstrahl 4.1b und 4.2b (M), Referenzteilstrahl 5.1 und 5.2 (R) sowie die gemischte Polarisierung des Empfangsstrahls 4b (NP und Ms).

**Patentansprüche**

1. Vorrichtung zur interferometrischen Vermessung eines Objekts (10), wobei die Vorrichtung ausgebildet ist, die Bewegung und/oder Geschwindigkeit der Oberfläche des Objekts zu bestimmen, umfassend eine Strahlungsquelle (1) zur Erzeugung eines Ausgangsstrahls (3), eine Strahlteilervorrichtung (2) zur Aufteilung des Ausgangsstrahls (3) in einen Mess- und einen Referenzstrahl (4, 5), eine optische Überlagerungsvorrichtung und einen ersten Detektor (6), wobei Überlagerungsvorrichtung und erster Detektor (6) derart zusammenwirkend ausgestaltet sind, dass der von dem Objekt zumindest teilweise reflektierte Messstrahl (4) als Empfangsstrahl (4b) und der Referenzstrahl (5) auf mindestens einer Detektorfläche des ersten Detektors (6) zumindest teilweise überlagert sind, wobei die Strahlteilervorrichtung ausgebildet ist zur Aufteilung des Ausgangsstrahls (3) in einen Messstrahl (4), einen ersten Referenzteilstrahl (5.1) und mindestens einen zweiten Referenzteilstrahl (5.2) und zur Aufteilung des Empfangsstrahls (4b) in einen ersten Empfangsteilstrahl (4.1b) und mindestens einen zweiten Empfangsteilstrahl (4.2b), wobei die Vorrichtung mindestens einen zweiten Detektor (13) aufweist und derart ausgebildet ist, dass der erste Empfangsteilstrahl (4b) mit dem ersten Referenzteilstrahl (5.1) auf einer Detektionsfläche des ersten Detektors (6) und der zweite Empfangsteilstrahl (4.2b) mit dem zweiten Referenzteilstrahl (5.2) auf einer Detektionsfläche des zweiten Detektors (13) überlagert sind, jeweils unter Ausbildung einer optischen Interferenz, **dadurch gekennzeichnet,** **dass** die Vorrichtung eine Auswerteeinheit zur Auswertung der Messsignale des ersten und des zweiten Detektors (6, 13) aufweist, welche ausgebildet ist, die Messsignale der beiden Detektoren nach dem Prinzip der Empfangs-Diversität derart auszuwerten, **dass** mittels der beiden Detektoren der Empfangsstrahl hinsichtlich unterschiedlicher Kriterien ausgewertet wird und somit mittels des ersten Detektors zumindest teilweise eine andere in dem Empfangsstrahl enthaltene Information ausgewertet wird, verglichen mit der mittels des zweiten Detektors ausgewerteten Information des Empfangsstrahls, wobei die vorgenannte Informationstrennung der im Empfangsstrahl enthaltenen Informationen und Zuordnung einerseits zu dem ersten Detektor und andererseits zu dem zweiten Detektor hinsichtlich mindestens eines der folgenden Kriterien durchgeführt wird:

    - Detektion unterschiedlicher Strahlquerschnittsanteile,
    - Detektion unterschiedlicher Moden,
    - Detektion unterschiedlicher Polarisationskomponenten,

des Empfangsstrahls
und die Auswerteeinheit dazu ausgebildet ist,
**dass** sowohl das Messsignal des ersten Detektors als auch das Messsignal des zweiten Detektors gemäß einem Gütekriterium bewertet wird, wobei dasjenige Signal für die Auswertung verwendet wird, welches die höhere Gütebewertung aufweist oder
ein kombiniertes Ausgangssignal aus dem Messsignal des ersten Detektors und dem Messsignal des zweiten Detektors gebildet wird, wobei eine Wichtung anhand der Gütebewertung erfolgt, wobei die Gütebewertung abhängig von der Signalstärke des Messsignals erfolgt, sodass der Detektor, welcher eine höhere Signalstärke des Messsignals aufweist, eine höhere Gütebewertung erhält, verglichen mit dem anderen Detektor mit einer geringeren Signalstärke des Messsignals.

2. Vorrichtung nach Anspruch 1, **dadurch gekennzeichnet,** **dass** die Vorrichtung mindestens ein optisches Strahlteilmittel umfasst, welches im Strahlengang des Empfangsstrahls (4b) und/oder des ersten und/oder des zweiten Empfangsteilstrahl (4.1b, 4.2b) angeordnet und derart ausgebildet ist, dass mit erstem und zweitem Detektor unterschiedliche Polarisationsanteile und/oder unterschiedliche Strahlquerschnittsanteile und/oder unterschiedliche Moden des Empfangsstrahls (4b) ausgewertet werden.

3. Vorrichtung nach einem der vorangegangenen Ansprüche, **dadurch gekennzeichnet,** **dass** die Strahlteilervorrichtung ein Polarisationsmittel (12) umfasst, welches derart ausgebildet ist, **dass** mittels des ersten und zweiten Detektors (6, 13) zueinander orthogonal polarisierte Anteile des Empfangsstrahls (4b) ausgewertet werden, insbesondere zueinander senkrecht stehende lineare Polarisationsanteile oder gegenläufige zirkulare Polarisationsanteile.

**4.** Vorrichtung nach Anspruch 3,
**dadurch gekennzeichnet,**
**dass** das Polarisationsmittel (12) einen Polarisationsstrahlteiler umfasst, welcher im Strahlengang des Empfangsstrahls (4b) angeordnet ist, sodass der Empfangsstrahl in den ersten Empfangsteilstrahl (4.1b) und den zweiten Empfangsteilstrahl (4.2b) aufgespalten wird und erster und zweiter Empfangsteilstrahl unterschiedliche Polarisationskomponenten des Empfangsstrahls umfassen.

**5.** Vorrichtung nach Anspruch 4,
**dadurch gekennzeichnet,**
**dass** der Polarisationsstrahlteiler zusätzlich im Strahlengang des Referenzstrahls (5) angeordnet ist, sodass mittels des Polarisationsstrahlteilers der Referenzstrahl in den ersten und zweiten Referenzteilstrahl (5.1, 5.2) aufgespalten wird.

**6.** Vorrichtung nach einem der vorangegangenen Ansprüche,
**dadurch gekennzeichnet,**
**dass** die optischen Strahlachsen des kollimierten Sende- und Empfangsstrahls (4a, 4b) zumindest zwischen einem Strahlausgang der Vorrichtung und Objekt (10) parallel und übereinander liegen.

**7.** Vorrichtung nach einem der Ansprüche 1 bis 5,
**dadurch gekennzeichnet,**
**dass** die optischen Strahlachsen des kollimierten Sende- und Empfangsstrahls (4a, 4b) zumindest zwischen einem Strahlausgang der Vorrichtung und Objekt (10) räumlich getrennt nebeneinander liegen, vorzugsweise parallel nebeneinander liegen.

**8.** Vorrichtung nach einem der vorangegangenen Ansprüche,
**dadurch gekennzeichnet,**
**dass** die Vorrichtung eine Signalverarbeitungseinheit umfasst, wobei die Signalverarbeitungseinheit ausgebildet ist, ein kombiniertes Ausgangssignal aus den Messdaten des ersten und des zweiten Detektors zu erzeugen, vorzugsweise durch gewichtete Summierung der Messsignale des ersten und zweiten Detektors, bevorzugt durch Wichtung abhängig von den Signalstärken des Messsignals des ersten und zweiten Detektors (6, 13).

**9.** Vorrichtung nach einem der vorangegangenen Ansprüche,
**dadurch gekennzeichnet,**
**dass** im Strahlengang von Messstrahl und Empfangsstrahl eine Sende-/Empfangslinse angeordnet ist, insbesondere,
**dass** die Strahlachsen von Mess- und Empfangsstrahl parallel und räumlich getrennt eine Apertur der Sende-/Empfangslinse durchdringen, bevorzugt, dass das Strahlintensitätsprofil von Mess- und/oder Empfangsstrahl, bevorzugt von beiden Strahlen, derart geformt ist, dass die Apertur der Sende-/Empfangslinse überwiegend genutzt wird, insbesondere, dass das Strahlintensitätsprofil von Mess- und/oder Empfangsstrahl, bevorzugt von beiden Strahlen elliptisch mit einem Achsenverhältnis im Bereich von 1:1.5 bis 1:2.5 ausgebildet ist.

**10.** Verfahren zur interferometrischen Vermessung eines Objektes (10), wobei mittels des Verfahrens die Bewegung und/oder Geschwindigkeit der Oberfläche des Objekts bestimmt werden,
folgende Verfahrensschritte umfassend:

- Erzeugen eines Ausgangsstrahls mittels einer Strahlungsquelle (1);
- Aufspalten des Ausgangsstrahls in mindestens einen Mess- und mindestens einen Referenzstrahl (4, 5);
- Beaufschlagen mindestens eines Messpunktes auf dem Objekt (10) mit dem Messstrahl (4) als Sendestrahl (4a) und
- Überlagern des von dem Objekt (10) zumindest teilweise reflektierten und/oder gestreuten Messstrahls (4) als Empfangsstrahl (4b) mit dem Referenzstrahl (5) auf einer Detektionsfläche eines ersten Detektors (6) unter Ausbildung einer optischen Interferenz;

wobei der Ausgangsstrahl (3) in einen Messstrahl (4), einen ersten Referenzteilstrahl (5.1) und mindestens einen zweiten Referenzteilstrahl (5.2) und der Empfangsstrahl in einen ersten Empfangsteilstrahl (4.1b) und mindestens einen zweiten Empfangsteilstrahl (4.2b) aufgeteilt wird,
wobei der erste Empfangsteilstrahl (4.1b) mit dem ersten Referenzteilstrahl (5.1) auf der Detektionsfläche des ersten Detektors (6) und der zweite Empfangsteilstrahl (4.2b) mit dem zweiten Referenzteilstrahl (5.2) auf einer Detektionsfläche eines zweiten Detektors (13) überlagert werden, jeweils unter Ausbildung einer optischen Interferenz,
**dadurch gekennzeichnet,**
**dass** Messsignale des ersten und des zweiten Detektors (6, 13) nach dem Prinzip der Empfangs-Diversität derart ausgewertet werden,
**dass** mittels der beiden Detektoren der Empfangsstrahl hinsichtlich unterschiedlicher Kriterien ausgewertet wird und somit mittels des ersten Detektors zumindest teilweise eine andere in dem Empfangsstrahl enthaltene Information ausgewertet wird, verglichen mit der mittels des zweiten Detektors ausgewerteten Information des Empfangsstrahls,
wobei die vorgenannte Informationstrennung der im Empfangsstrahl enthaltenen Informationen und Zuordnung einerseits zu dem ersten Detektor und andererseits zu dem zweiten Detektor hinsichtlich mindestens eines der folgenden Kriterien durchgeführt

wird:

    - Detektion unterschiedlicher Strahlquerschnittsanteile,
    - Detektion unterschiedlicher Moden,
    - Detektion unterschiedlicher Polarisationskomponenten,

des Empfangsstrahls
und wobei eine Auswertung derart erfolgt,
**dass** sowohl das Messsignal des ersten Detektors als auch das Messsignal des zweiten Detektors gemäß einem Gütekriterium bewertet wird, wobei dasjenige Signal für die Auswertung verwendet wird, welches die höhere Gütebewertung aufweist oder ein kombiniertes Ausgangssignal aus dem Messsignal des ersten Detektors und dem Messsignal des zweiten Detektors gebildet wird, wobei eine Wichtung anhand der Gütebewertung erfolgt, wobei die Gütebewertung abhängig von der Signalstärke des Messsignals erfolgt, sodass der Detektor, welcher eine höhere Signalstärke des Messsignals aufweist, eine höhere Gütebewertung erhält, verglichen mit dem anderen Detektor mit einer geringeren Signalstärke des Messsignals.

**11.** Verfahren nach Anspruch 10,
**dadurch gekennzeichnet,**
**dass** mittels des ersten Detektors (6) unterschiedliche Polarisationsanteile und/oder unterschiedliche Strahlquerschnittsanteile und/oder unterschiedliche Moden des Empfangsstrahls gegenüber dem zweiten Detektor (13) gemessen werden.

**12.** Verfahren nach einem der Ansprüche 10 bis 11,
**dadurch gekennzeichnet,**
**dass** eine Auswertung der Messsignale der beiden Detektoren (6, 13) derart erfolgt, dass aus den Messsignalen der beiden Detektoren ein kombiniertes Messsignal gebildet wird, wobei eine gewichtete Summierung des ersten und zweiten Messsignals erfolgt, vorzugsweise unter Berücksichtigung der Leistung und/oder der Amplitude des Messsignals.

**13.** Verfahren nach einem der Ansprüche 10 bis 12,
**dadurch gekennzeichnet,**
**dass** für das erste Messsignal ein erster Wichtungsfaktor und für das zweite Messsignal ein zweiter Wichtungsfaktor gebildet wird, welche Wichtungsfaktoren komplementär zueinander und jeweils abhängig von erstem und zweiten Messsignal, vorzugsweise der Amplitude des ersten und des zweiten Messsignals gebildet werden, insbesondere, dass die Wichtungsfaktoren derart gebildet werden, dass jeweils das Messsignal mit der größeren Amplitude zu 100% und das Messsignal mit der geringeren Amplitude zu 0% gewichtet wird oder dass die Wichtung linear gemäß des Amplitudenverhältnisses erfolgt.

**14.** Verfahren nach einem der Ansprüche 10 bis 13,
**dadurch gekennzeichnet,**
**dass** der Polarisationszustand des Mess- und/oder Empfangsstrahls mittels eines optischen Mittels derart beeinflusst wird, dass Empfangskanäle beider Detektoren (6, 13) während der Vermessung eines metallisch spiegelnden Objekts im Wesentlichen gleiche Signalstärken aufweisen, insbesondere, dass ein optisches Mittel aufweisend eine optische Verzögerungsplatte verwendet wird.

**Claims**

**1.** Device for interferometric measurement of an object (10), wherein the device is configured to determine the movement and/or speed of the surface of the object,
comprising a radiation source (1) for generating an output beam (3), a beam splitter device (2) for splitting the output beam (3) into a measuring beam (4) and a reference beam (5), an optical superimposition device and a first detector (6),
wherein the superimposition device and the first detector (6) are configured to co-operate in such a way that the measuring beam (4) at least partly reflected by the object as received beam (4b) and the reference beam (5) are at least partly superimposed on at least one detector surface of the first detector (6),
wherein the beam splitter device is configured to split the output beam (3) into a measuring beam (4), a first reference sub-beam (5.1) and at least one second reference sub-beam (5.2) and to split the received beam (4b) into a first received sub-beam (4.1b) and at least one second received sub-beam (4.2b),
wherein the device has at least one second detector (13) and is configured in such a way that the first received sub-beam (4b) is superimposed with the first reference sub-beam (5.1) on a detection surface of the first detector (6) and the second received sub-beam (4.2b) is superimposed with the second reference sub-beam (5.2) on a detection surface of the second detector (13), in each case giving rise to optical interference,
**characterised in that**
the device has an evaluating unit for evaluating the measuring signals of the first and second detectors (6, 13), which evaluating unit is configured to evaluate the measuring signals of the two detectors according to the principle of reception diversity in such a way that
by means of the two detectors the received beam is evaluated in respect of different criteria and accordingly, at least to some extent, different information contained in the received beam is evaluated by means of the first detector, compared with the information of the received beam evaluated by means of the second detector,

wherein the afore-mentioned separation of the information contained in the received beam and assignment on the one hand to the first detector and on the other hand to the second detector is carried out in respect of at least one of the following criteria:

- detection of different beam cross-section components,
- detection of different modes,
- detection of different polarisation components,

of the received beam,

and the evaluating unit is configured so that both the measuring signal of the first detector and the measuring signal of the second detector is rated in accordance with a quality criterion,

there being used for the evaluation that signal which has the higher quality rating or

a combined output signal is formed from the measuring signal of the first detector and the measuring signal of the second detector, a weighting being applied on the basis of the quality rating,

wherein the quality rating is effected in dependence upon the signal strength of the measuring signal, so that the detector which has a higher signal strength of the measuring signal is given a higher quality rating, compared with the other detector having a lower signal strength of the measuring signal.

2. Device according to claim 1,
   **characterised in that**
   the device comprises at least one optical beam-splitting means which is arranged in the beam path of the received beam (4b) and/or of the first and/or of the second received sub-beam (4.1b, 4.2b) and is configured in such a way that, with the first and second detectors, different polarisation components and/or different beam cross-section components and/or different modes of the received beam (4b) are evaluated.

3. Device according to either one of the preceding claims,
   **characterised in that**
   the beam splitter device comprises a polarisation means (12) which is configured in such a way that by means of the first and second detectors (6, 13) components of the received beam (4b) that are polarised orthogonally with respect to one another are evaluated, especially linear polarisation components perpendicular to one another or circular polarisation components in opposite directions.

4. Device according to claim 3,
   **characterised in that**

the polarisation means (12) comprises a polarisation beam splitter which is arranged in the beam path of the received beam (4b) so that the received beam is split into the first received sub-beam (4.1b) and the second received sub-beam (4.2b), and the first and second received sub-beams comprise different polarisation components of the received beam.

5. Device according to claim 4,
   **characterised in that**
   the polarisation beam splitter is additionally arranged in the beam path of the reference beam (5) so that by means of the polarisation beam splitter the reference beam is split into the first and second reference sub-beams (5.1, 5.2).

6. Device according to any one of the preceding claims,
   **characterised in that**
   the optical beam axes of the collimated transmitted and received beams (4a, 4b), at least between a beam output of the device and the object (10), lie in parallel and one on top of the other.

7. Device according to any one of claims 1 to 5,
   **characterised in that**
   the optical beam axes of the collimated transmitted and received beams (4a, 4b), at least between a beam output of the device and the object (10), are spatially separate one next to the other, preferably in parallel one next to the other.

8. Device according to any one of the preceding claims,
   **characterised in that**
   the device comprises a signal-processing unit, the signal-processing unit being configured to generate a combined output signal from the measured data of the first and second detectors, preferably by weighted summation of the measuring signals of the first and second detectors, preferably by weighting in dependence upon the signal strengths of the measuring signal of the first and second detectors (6, 13).

9. Device according to any one of the preceding claims,
   **characterised in that**
   a transmitting/receiving lens is arranged in the beam path of the measuring beam and received beam; especially
   the beam axes of the measuring and received beams pass through an aperture of the transmitting/receiving lens in parallel and spatially separate;
   preferably, the beam intensity profile of the measuring and/or received beam, preferably of both beams, is such that most of the aperture of the transmitting/receiving lens is utilised; especially, the beam intensity profile of the measuring and/or received beam, preferably of both beams, is elliptical with an axial ratio in the range of from 1:1.5 to 1:2.5.

**10.** Method for interferometric measurement of an object (10), wherein by means of the method the movement and/or speed of the surface of the object are determined,

comprising the following method steps:

- generation of an output beam by means of a radiation source (1);
- splitting of the output beam into at least one measuring beam (4) and at least one reference beam (5);
- impingement of the measuring beam (4) as transmitted beam (4a) on at least one measuring point on the object (10); and
- superimposition of the measuring beam (4) at least partly reflected and/or scattered by the object (10) as received beam (4b) with the reference beam (5) on a detection surface of a first detector (6), giving rise to optical interference;

wherein the output beam (3) is split into a measuring beam (4), a first reference sub-beam (5.1) and at least one second reference sub-beam (5.2) and the received beam is split into a first received sub-beam (4.1b) and at least one second received sub-beam (4.2b),

wherein the first received sub-beam (4b) is superimposed with the first reference sub-beam (5.1) on the detection surface of the first detector (6) and the second received sub-beam (4.2b) is superimposed with the second reference sub-beam (5.2) on a detection surface of a second detector (13), in each case giving rise to optical interference,

**characterised in that**

measuring signals of the first and second detectors (6, 13) are evaluated in accordance with the principle of reception diversity in such a way that

by means of the two detectors the received beam is evaluated in respect of different criteria and accordingly, at least to some extent, different information contained in the received beam is evaluated by means of the first detector, compared with the information of the received beam evaluated by means of the second detector,

wherein the afore-mentioned separation of the information contained in the received beam and assignment on the one hand to the first detector and on the other hand to the second detector is carried out in respect of at least one of the following criteria:

- detection of different beam cross-section components,
- detection of different modes,
- detection of different polarisation components,

of the received beam,

and wherein an evaluation is carried out in such a way that

both the measuring signal of the first detector and the measuring signal of the second detector is rated in accordance with a quality criterion,

there being used for the evaluation that signal which has the higher quality rating or

a combined output signal is formed from the measuring signal of the first detector and the measuring signal of the second detector, a weighting being applied on the basis of the quality rating,

wherein the quality rating is effected in dependence upon the signal strength of the measuring signal, so that the detector which has a higher signal strength of the measuring signal is given a higher quality rating, compared with the other detector having a lower signal strength of the measuring signal.

**11.** Method according to claim 10,

**characterised in that**

by means of the first detector (6) different polarisation components and/or different beam cross-section components and/or different modes of the received beam are measured as compared with the second detector (13).

**12.** Method according to either one of claims 10 and 11,

**characterised in that**

an evaluation of the measuring signals of the two detectors (6, 13) is carried out in such a way that a combined measuring signal is formed from the measuring signals of the two detectors, a weighted summation of the first and second measuring signals being carried out, preferably taking account of the power and/or amplitude of the measuring signal.

**13.** Method according to any one of claims 10 to 12,

**characterised in that**

a first weighting factor is formed for the first measuring signal and a second weighting factor is formed for the second measuring signal, which weighting factors are complementary to one another and are each formed in dependence upon the first and second measuring signal, preferably upon the amplitude of the first and second measuring signal; especially, the weighting factors are formed in such a way that in each case the measuring signal having the greater amplitude is weighted at 100 % and the measuring signal having the smaller amplitude is weighted at 0 %; or the weighting is applied linearly in accordance with the amplitude ratio.

**14.** Method according to any one of claims 10 to 13,

**characterised in that**

the polarisation state of the measuring and/or received beam is influenced by means of an optical means in such a way that, during the measurement of a metallically reflecting object, receive channels of both detectors (6, 13) have substantially the same signal strengths; especially, an optical means having an optical waveplate is used.

## Revendications

1. Dispositif dévolu à la mesure interférométrique d'un objet (10), ledit dispositif étant réalisé en vue de déterminer le mouvement et/ou la vitesse de la surface dudit objet,

   comprenant une source de rayonnements (1) conçue pour engendrer un faisceau de sortie (3), un dispositif (2) de subdivision de faisceaux, conçu pour scinder ledit faisceau de sortie (3) en des faisceaux (4, 5) de mesure et de référence, un dispositif de superposition optique et un premier détecteur (6), ledit dispositif de superposition et ledit premier détecteur (6) étant configurés pour coopérer de façon telle que le faisceau de mesure (4), réfléchi au moins partiellement par l'objet et agissant comme un faisceau de réception (4b), et le faisceau de référence (5), soient superposés au moins en partie sur au moins une surface de détection dudit premier détecteur (6),

   ledit dispositif de subdivision de faisceaux étant réalisé en vue de scinder le faisceau de sortie (3) en un faisceau de mesure (4), en un premier faisceau partiel de référence (5.1) et en au moins un second faisceau partiel de référence (5.2), et en vue de scinder le faisceau de réception (4b) en un premier faisceau partiel de réception (4.1b) et en au moins un second faisceau partiel de réception (4.2b),

   sachant que le dispositif comporte au moins un second détecteur (13)

   et est réalisé de telle sorte qu'il se produise une superposition, sur une surface de détection du premier détecteur (6), du premier faisceau partiel de réception (4.1b) conjointement au premier faisceau partiel de référence (5.1) et, sur une surface de détection dudit second détecteur (13), du second faisceau partiel de réception (4.2b) conjointement au second faisceau partiel de référence (5.2), avec instauration respective d'une interférence optique,

   **caractérisé par le fait**

   **que** ledit dispositif est muni d'une unité d'évaluation, conçue pour évaluer les signaux de mesure des premier et second détecteurs (6, 13) et réalisée en vue d'évaluer lesdits signaux de mesure des deux détecteurs suivant le principe de la diversité de réception, de telle manière

   **que** le faisceau de réception soit évalué relativement à différents critères au moyen des deux détecteurs et qu'il s'opère de la sorte, au moins partiellement, au moyen du premier détecteur, une évaluation d'une information contenue dans ledit faisceau de réception et présentant une nature autre comparativement à l'information dudit faisceau de réception évaluée au moyen du second détecteur,

   sachant que la séparation précitée des informations contenues dans ledit faisceau de réception et l'assignation audit premier détecteur, d'une part, et audit second détecteur d'autre part, sont effectuées relativement à au moins l'un des critères suivants :

   - détection de différentes parts constitutives de la section transversale de rayonnement,
   - détection de différents modes,
   - détection de différents composants de polarisation

   dudit faisceau de réception,

   et l'unité d'évaluation est conçue pour faire en sorte **qu'**aussi bien le signal de mesure du premier détecteur, que le signal de mesure du second détecteur, soient évalués en conformité avec un critère qualitatif,

   étant précisé que le signal, utilisé pour l'évaluation, est celui qui présente l'estimation qualitative plus élevée, ou bien

   **qu'**un signal de sortie combiné soit formé sur la base dudit signal de mesure du premier détecteur et dudit signal de mesure du second détecteur, une pondération étant effectuée à l'appui de l'estimation qualitative,

   laquelle estimation qualitative a lieu en fonction de l'intensité du signal de mesure, de sorte que le détecteur, dont le signal de mesure présente une intensité plus élevée, se voit attribuer une estimation qualitative plus élevée comparativement à l'autre détecteur dont le signal de mesure présente une intensité moindre.

2. Dispositif selon la revendication 1,
   **caractérisé par le fait**
   **que** ledit dispositif inclut au moins un moyen optique de subdivision de faisceaux qui est situé sur le trajet de rayonnement du faisceau de réception (4b) et/ou du (des) premier et/ou second faisceau(x) partiel(s) de réception (4.1b, 4.2b), et est réalisé de façon telle que différentes parts constitutives de la polarisation et/ou différentes parts constitutives de la section transversale de rayonnement, et/ou différents modes dudit faisceau de réception (4b), soient évalué(e)s par les premier et second détecteurs.

3. Dispositif selon l'une des revendications précédentes,
   **caractérisé par le fait**
   **que** le dispositif de subdivision de faisceaux inclut un moyen de polarisation (12) réalisé de façon telle **que** des parts constitutives du faisceau de réception (4b) mutuellement polarisées en mode orthogonal, notamment des parts constitutives de polarisation linéaires perpendiculaires les unes aux autres ou des parts constitutives de polarisation circulaires, de sens opposés, soient évaluées au moyen des premier et second détecteurs (6, 13).

**4.** Dispositif selon la revendication 3,
**caractérisé par le fait**
**que** le moyen de polarisation (12) inclut un diviseur de faisceaux de polarisation qui est situé sur le trajet de rayonnement du faisceau de réception (4b), de telle sorte que ledit faisceau de réception soit scindé en le premier faisceau partiel de réception (4.1b) et en le second faisceau partiel de réception (4.2b), et que lesdits premier et second faisceaux partiels de réception comprennent différents composants de polarisation dudit faisceau de réception.

**5.** Dispositif selon la revendication 4,
**caractérisé par le fait**
**que** le diviseur de faisceaux de polarisation est additionnellement placé sur le trajet de rayonnement du faisceau de référence (5), de façon telle que ledit faisceau de référence soit scindé en les premier et second faisceaux partiels de référence (5.1, 5.2) au moyen dudit diviseur de faisceaux de polarisation.

**6.** Dispositif selon l'une des revendications précédentes,
**caractérisé par le fait**
**que** les axes optiques de rayonnement des faisceaux d'émission et de réception (4a, 4b) collimatés sont agencés parallèlement, et en superposition mutuelle, au moins entre l'objet (10) et une sortie de faisceaux dudit dispositif.

**7.** Dispositif selon l'une des revendications 1 à 5,
**caractérisé par le fait**
**que** les axes optiques de rayonnement des faisceaux d'émission et de réception (4a, 4b) collimatés sont agencés en juxtaposition avec séparation dans l'espace, de préférence en juxtaposition parallèle, au moins entre l'objet (10) et une sortie de faisceaux dudit dispositif.

**8.** Dispositif selon l'une des revendications précédentes,
**caractérisé par le fait**
**que** ledit dispositif inclut une unité de traitement de signaux, laquelle unité de traitement de signaux est réalisée en vue d'engendrer un signal de sortie combiné, sur la base des données de mesure des premier et second détecteurs, de préférence par sommation pondérée des signaux de mesure desdits premier et second détecteurs, préférentiellement par pondération tributaire des intensités desdits signaux de mesure des premier et second détecteurs (6, 13).

**9.** Dispositif selon l'une des revendications précédentes,
**caractérisé par le fait**
**qu'**une lentille émettrice/réceptrice est implantée sur le trajet de rayonnement du faisceau de mesure et du faisceau de réception ; notamment

par le fait que les axes de rayonnement desdits faisceaux de mesure et de réception traversent une ouverture de ladite lentille émettrice/réceptrice, parallèlement et avec séparation dans l'espace ;
de préférence par le fait que le profil d'intensité de rayonnement dudit (desdits) faisceau(x) de mesure et/ou de réception, préférentiellement des deux faisceaux, est formé de telle manière que ladite ouverture de la lentille émettrice/réceptrice soit majoritairement utilisée ; notamment
par le fait que le profil d'intensité de rayonnement dudit (desdits) faisceau(x) de mesure et/ou de réception, préférentiellement des deux faisceaux, est de conception elliptique avec un rapport axial situé dans la plage de 1:1,5 à 1:2,5.

**10.** Procédé de mesure interférométrique d'un objet (10), le mouvement et/ou la vitesse de la surface dudit objet étant déterminé(e)(s) au moyen dudit procédé,
incluant les étapes opératoires consistant à :

- engendrer un faisceau de sortie au moyen d'une source de rayonnements (1) ;
- scinder ledit faisceau de sortie en au moins des faisceaux (4, 5) de mesure et de référence ;
- solliciter au moins un point de mesure, sur l'objet (10), par le faisceau de mesure (4) agissant comme un faisceau d'émission (4a) et
- superposer sur une surface de détection d'un premier détecteur (6), avec instauration d'une interférence optique, ledit faisceau de mesure (4) au moins partiellement réfléchi et/ou diffusé par ledit objet (10) et agissant comme un faisceau de réception (4b), conjointement au faisceau de référence (5) ;

sachant que le faisceau de sortie (3) est scindé en un faisceau de mesure (4), en un premier faisceau partiel de référence (5.1) et en au moins un second faisceau partiel de référence (5.2), et que le faisceau de réception est scindé en un premier faisceau partiel de réception (4.1b) et en au moins un second faisceau partiel de réception (4.2b),
étant précisé que ledit premier faisceau partiel de réception (4.1b) est superposé sur la surface de détection dudit premier détecteur (6), conjointement audit premier faisceau partiel de référence (5.1), et que ledit second faisceau partiel de réception (4.2b) est superposé sur une surface de détection d'un second détecteur (13), conjointement audit second faisceau partiel de référence (5.2), avec instauration respective d'une interférence optique,
**caractérisé par le fait**
**que** des signaux de mesure des premier et second détecteurs (6, 13) sont évalués suivant le principe de la diversité de réception, de façon telle
**que** le faisceau de réception soit évalué relativement à différents critères au moyen des deux détecteurs et qu'il s'opère de la sorte, au moins partiellement, au moyen du premier détecteur, une évaluation d'une information contenue dans ledit faisceau de réception et présentant une nature autre comparativement à l'information dudit faisceau de réception évaluée au moyen du second détecteur,

sachant que la séparation précitée des informations contenues dans ledit faisceau de réception et l'assignation audit premier détecteur, d'une part, et audit second détecteur d'autre part, sont effectuées relativement à au moins l'un des critères suivants :

- détection de différentes parts constitutives de la section transversale de rayonnement,
- détection de différents modes,
- détection de différents composants de polarisation

dudit faisceau de réception,

et sachant qu'il s'opère une évaluation telle **qu'**aussi bien le signal de mesure du premier détecteur, que le signal de mesure du second détecteur, soient évalués en conformité avec un critère qualitatif,

étant précisé que le signal, utilisé pour l'évaluation, est celui qui présente l'estimation qualitative plus élevée, ou bien

**qu'**un signal de sortie combiné soit formé sur la base dudit signal de mesure du premier détecteur et dudit signal de mesure du second détecteur, une pondération étant effectuée à l'appui de l'estimation qualitative,

laquelle estimation qualitative a lieu en fonction de l'intensité du signal de mesure, de sorte que le détecteur, dont le signal de mesure présente une intensité plus élevée, se voit attribuer une estimation qualitative plus élevée comparativement à l'autre détecteur dont le signal de mesure présente une intensité moindre.

11. Procédé selon la revendication 10,
**caractérisé par le fait**
**que** différentes parts constitutives de la polarisation et/ou différentes parts constitutives de la section transversale de rayonnement, et/ou différents modes du faisceau de réception, sont mesuré(e)s au moyen du premier détecteur (6) par rapport au second détecteur (13).

12. Procédé selon l'une des revendications 10 à 11,
**caractérisé par le fait**
**qu'**une évaluation des signaux de mesure des deux détecteurs (6, 13) est effectuée de façon telle qu'un signal de sortie combiné soit formé sur la base des signaux de mesure desdits deux détecteurs, sachant qu'il s'opère une sommation pondérée des premier et second signaux de mesure, de préférence avec prise en compte de la puissance et/ou de l'amplitude du signal de mesure.

13. Procédé selon l'une des revendications 10 à 12,
**caractérisé par le fait**
**qu'**un premier facteur de pondération et un second facteur de pondération sont formés, respectivement, pour le premier signal de mesure et pour le second signal de mesure, lesquels facteurs de pondération sont complémentaires l'un de l'autre et sont formés, à chaque fois, en fonction des premier et second signaux de mesure, préférentiellement de l'amplitude desdits premier et second signaux de mesure ; notamment par le fait que lesdits facteurs de pondération sont formés de façon telle que le signal de mesure présentant la plus grande amplitude, et le signal de mesure présentant l'amplitude moindre, soient respectivement pondérés à 100 % et à 0 %, ou bien que la pondération ait lieu linéairement, en conformité avec le rapport entre amplitudes.

14. Procédé selon l'une des revendications 10 à 13,
**caractérisé par le fait**
**que** l'état de polarisation du (des) faisceau(x) de mesure et/ou de réception est influencé, à l'aide d'un moyen optique, de telle sorte que des canaux récepteurs des deux détecteurs (6, 13) présentent, pour l'essentiel, des intensités de signaux identiques au cours de la mesure d'un objet émettant des réflexions métalliques, en particulier avec utilisation d'un moyen optique doté d'une platine de temporisation optique.

Figur 1

Figur 2

Figur 3

Figur 4

# Figur 5

## -Stand der Technik-

Figur 6

EP 2 682 709 B1

Figur 7

Figur 8

Figur 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20070091316 A1
- US 20060103850 A1
- WO 004370 A
- US 20030174339 A1
- US 20070109553 A1
- US 20070278389 A1
- EP 2280256 A1

### In der Beschreibung aufgeführte Nicht-Patentliteratur

- **GOODMAN, JOSPEH W.** Speckle phenomena in optics. Roberts and Company Publishers, 2007, 47